# EUROPEAN PATENT SPECIFICATION

(11) **EP 3 464 758 B1**
(45) Date of publication and mention of the grant of the patent: **16.04.2025**
(21) Application number: 17805420.1
(22) Date of filing: 03.06.2017
(51) Int. Cl.: E04H 17/14, E04F 11/18, E04B 1/18, E04B 2/72, E04B 2/74, E04B 7/00, E04B 9/06, E04B 9/34, E04C 2/30, E04C 5/16, E04D 3/00, E04D 12/00, E04F 10/00, E04F 15/02, E06B 9/00, F16B 2/02, F16B 2/20, F16B 7/04, F16B 9/02, B23P 19/02

(54) **PANEL SYSTEMS AND COMPONENTS**
PLATTENSYSTEME UND -KOMPONENTEN
SYSTÈMES ET ÉLÉMENTS DE PANNEAU

(30) Priority: 03.06.2016 AU 2016902172; 04.05.2017 AU 2017901618; 04.05.2017 AU 2017901619
(43) Date of publication of application: 10.04.2019
(73) Proprietor: Tomm Tech Pty Ltd, Perth, Western Australia 6230 (AU)
(72) Inventor: HODGSON, Thomas, Perth, Western Australia 6230 (AU); HODGSON, Riley, Bunbury, Perth 6230 (AU)
(74) Representative: Spachmann, Holger
(86) International application number: PCT/AU2017/050544
(87) International publication number: WO 2017/205940

(56) References cited:
- EP-A1- 2 682 614
- AU-A4- 2009 100 361
- DE-A1- 2 904 520
- DE-U1- 202015 005 204
- US-A- 3 498 589
- US-A- 5 313 761
- US-A1- 2002 079 482
- US-A1- 2009 282 772
- US-A1- 2011 024 060
- US-A1- 2011 127 482
- US-A1- 2015 097 151
- US-A1- 2015 115 214
- US-A1- 2015 252 588
- US-B1- 7 748 686

## Description

The present application claims priority from a number of Australian patent applications ('the priority applications'). The applications comprise: (i) application 2016902172 entitled PANEL SYSTEMS AND COMPONENTS and filed 2016-06-03; (ii) application 2017901619 entitled PANEL SYSTEMS AND COMPONENTS - CARTRIDGE and filed 2017-05-04; and (iii) application 2017901618 entitled PANEL SYSTEMS AND COMPONENTS - SEPARATE FASTENER and filed 2017-05-04.

### FIELD OF THE INVENTION

The present invention relates to panel mounts.

### BACKGROUND TO THE INVENTION

There are various panel systems available on the market allowing the construction of fences, screens, roofing, awnings and related structures. A number of problems have been observed with such systems.

For example the application of fasteners such as screws and rivets is time consuming. The fasteners may damage the panels during the application of the fasteners. The fasteners may also be subject to loosening causing the panels to rattle or fall apart.

The present inventors are considered to have developed several new fastening systems and fasteners. The applicant considers that it would be advantageous to provide an improved panel system or component, or to at least provide the public with a useful choice. It is considered that several aspects of the present application find application beyond panel systems. Such applications include furniture construction and construction in general.

Panel systems according to the state of the art are well known from DE 29 04 520 A1, US 2015/115214 A1, US 3 498 589 A and US 2009/282772 A1

It is against this background and the problems and difficulties associated therewith that the present inventors have developed the invention.

### SUMMARY OF THE INVENTION

The invention is set out in the appended set of claims.

According to the present invention there is provided a panel mount comprising: an elongate body; a plurality of fastening elements spaced along the elongate body; each fastening element configured for engaging at least one inner surface of the panel member to apply an engaging force that is directed laterally outwardly, relative to the panel member, when the panel member is engaged by the fastening element.

Preferably each fastening element is configured to apply a holding force that is sufficient to hold the panel member in position on the fastening element.

Preferably the holding force is able to hold the panel member in position on the fastening element against a force equivalent to 5 to 10kg weight acting longitudinally on the panel member.

Preferably the holding force is able to hold the panel member in position on the m fastening element ount against a force equivalent to 10 to 20kg weight acting longitudinally on the panel member.

Preferably the holding force is able to hold the panel member in position on the fastening element against a force equivalent to 5 to 20kg weight acting longitudinally on the panel member.

Preferably the holding force is able to hold the panel member in position on the fastening element against a force equivalent to 20 to 30kg weight acting longitudinally on the panel member.

Preferably the holding force is able to act against general hand action; some strain being required to remove the panel member by hand.

Preferably the panel mount is re-usable with each fastening element being removable from a panel member to allow the fastening element to be used with another panel member.

Preferably each fastening element comprises an extension that extends upwardly from the elongate body of the panel mount.

Preferably the extension includes members extending from the body of the extension towards the lateral sides of the elongate body; the members for bearing against the inner surfaces of the panel member to apply the engaging force in a direction laterally outwardly relative to the panel member.

Preferably the extension includes two or more circularly shaped portions for bearing against the inner surfaces of the panel member; to apply the engaging force in a direction laterally outwardly relative to the panel member; the circularly shaped portions configured to be compressed laterally inwardly as the fastening element is received by the panel member.

Preferably each fastening element has a longitudinal axis in the direction of the longitudinal axis of the elongate body; and the cross-section of each panel member has a longitudinal axis arranged at a first angle to the longitudinal axis of the fastening element; the first angle allowing the panel member to be positioned at the first angle relative to the length of the elongate body.

Preferably the fastening elements form a strip of fastening elements extending along an inner surface of the elongate body.

Preferably the strip is continuous with outer side walls of the panel members having inset portions to accommodate the continuous strip of fastening elements.

Preferably the mounts form a strip of fastening elements extending along an inner side wall of the elongate body; the strip of fastening elements being separated by dividing openings therein for allowing the outer side walls of the panel members to be received within the dividing openings.

According to the invention the panel mount includes a plurality of openings spaced along the elongate body; each opening being associated with one of the fastening elements; each fastening element for being received by a panel member extending through the associated opening.

The following embodiment of a panel mount is not according to the invention and can comprise: an elongate body; a plurality of openings spaced along the elongate body; a fastening element located opposite each opening for being received by a panel member extending through the opening; the fastening element configured for engaging at least one inner surface of the panel member to apply an engaging force that is directed laterally outwardly, relative to the panel member, when the panel member extends through the opening and engages the mount.

Preferably each fastening element is located on an internal side wall of the panel mount opposite the opening and each fastening element is configured to apply a holding force that is sufficient to hold the panel member in position on the fastening element.

Preferably the holding force is able to hold the panel member in position on the fastening element against a force equivalent to 5 to 10kg weight acting longitudinally on the panel member.

Preferably the holding force is able to hold the panel member in position on the fastening element against a force equivalent to 10 to 20kg weight acting longitudinally on the panel member.

Preferably the holding force is able to hold the panel member in position on the fastening element against a force equivalent to 20 to 30kg weight acting longitudinally on the panel member.

Preferably each fastening element is located on an internal side wall of the panel mount opposite the opening.

Preferably each fastening element comprises an extension that extends upwardly from the internal side wall of the panel mount opposite the opening.

Preferably the extension includes members extending from the body of the extension towards the inner side wall away from the opening, for bearing against the inner surfaces of the panel member and apply the engaging force in a direction laterally outwardly relative to the panel member.

Preferably the extension includes two or more circularly shaped portions for bearing against the inner surfaces of the panel member and applying the engaging force in a direction laterally outwardly relative to the panel member; the circularly shaped portions configured to be compressed laterally inwardly as the fastening element is received by the panel member.

Preferably each fastening element has a longitudinal axis in the direction of the longitudinal axis of the elongate body; and each opening has a longitudinal axis arranged at a first angle to the longitudinal axis of the fastening element; the first angle allowing the panel member to extend through the opening at the first angle relative to the length of the elongate body.

Preferably the fastening elements form a strip of fastening elements extending along an inner surface of the elongate body.

Preferably the strip is continuous with outer side walls of the panel members having inset portions to accommodate the continuous strip of fastening elements.

Preferably the fastening element form a strip of fastening elements extending along an inner side wall of the elongate body; the strip of mounts being separated by dividing openings therein for allowing the outer side walls of the panel members to be received within the dividing openings.

Preferably the elongate body is hollow, and each opening is of an elliptical shape facing opposite the strip of fastening elements.

The following embodiment of a panel system is not according to the invention and can comprise: an elongate panel mount and a plurality of panel members; the panel mount having a plurality of openings spaced along the panel mount; the panel mount having a fastening element located opposite each opening for being received by a respective one of the panel members extending through the opening; the fastening element configured for engaging inner surfaces of the panel member to apply an engaging force that is directed laterally outwardly, relative to the panel member, when the panel member extends through the opening and engages the fastening element.

Preferably each fastening element is located on an internal side wall of the panel mount opposite the opening.

Preferably each fastening element comprises an extension that extends upwardly from the internal side wall of the panel mount opposite the opening.

Preferably the extension includes members extending towards the inner side wall away from the opening, for bearing against the inner surfaces of the panel member and applying the engaging force in a direction laterally outwardly relative to the panel member.

Preferably the extension includes two or more circularly shaped portions for bearing against the inner surfaces of the panel member; in a direction laterally outwardly relative to the panel member; the circularly shaped portions configured to be compressed laterally inwardly as the fastening element is received by the panel member.

Preferably each fastening element has a longitudinal axis in the direction of the longitudinal axis of the elongate body; and each opening has a longitudinal axis arranged at a first angle to the longitudinal axis of the fastening element; the first angle allowing the panel member to extend through the opening at the first angle relative to the length of the elongate body.

Preferably the fastening elements form a strip of fastening elements extending along an inner surface of the elongate body.

Preferably the strip is continuous with outer side walls of the panel members having inset portions to accommodate the continuous strip of fastening elements.

Preferably the fastening elements form a strip of fastening elements extending along an inner surface of the elongate body; the strip of fastening elements being separated by openings therein for allowing the side walls of the panel members to be received within the openings.

Preferably the elongate body is hollow, and each opening is of an elliptical shape facing opposite the strip of fastening elements.

The following embodiment of a panel system is not according to the invention and can comprise: an elongate body; the body having at least one inner wall portion therein; each inner wall portion for receiving a fastening element that applies an engaging force to the inner wall portion that is directed laterally outwardly relative to the panel member.

The following embodiment of a panel mount is not according to the invention and can comprise: an elongate element having a plurality of openings spaced there along; each opening being associated with a corresponding fastening element ; each opening for receiving a panel member that is able to fit within the opening and engage the fastening element ; the fastening element of each opening being located opposite the opening and configured to apply an engaging force to inner wall portions of the panel member, the engaging force being directed laterally outwardly relative to the panel member.

The following embodiment of a panel system is not according to the invention and can comprise: a elongate panel mount and a plurality of panel members; the panel mount having a plurality of openings spaced therealong; each opening being associated with a respective fastening element; each opening for receiving a respective one of the panel members; the respective fastening element of each opening being located opposite the opening and configured to apply an engaging force to an inner wall portion of the panel member, the engaging force being directed laterally outwardly relative to the panel member.

According to an aspect of preferred embodiments herein described there is provided a panel member comprising: an elongate body having an outer periphery and an inner periphery; the inner periphery extending across the outer periphery to allow a fastening element received within the inner periphery to apply an engaging force to an inner wall portion of the inner periphery; the engaging force being in a direction laterally outwardly relative to the panel member.

Panel mounts according to embodiments may be formed as a unitary piece of extruded material that is subsequently machined.

Panel members according to embodiments may be formed as a unitary piece of extruded material. The panel members may be subsequently machined.

The panel mounts and panel members may respectively be formed in a unitary piece from extruded aluminium or another material.

The extrusions may be machined to provide openings and slots therein.

The cross-section of the mounts is preferably formed at the time of the extrusion. Various lengths, widths and depths may be selected depending on the particular circumstances.

The mounts may be deflected or compressed laterally inwardly as the fastening element is received by the panel member to apply the holding force. The holding force does not require any additional fasteners (such as glues or threaded fasteners and is reversible).

The following embodiment of a fastening element is not according to the invention and can comprise a elongate body having an extension, the extension including members extending from the body of the extension towards the lateral sides of the elongate body; the members for bearing against inner surfaces of a support to apply an engaging force in a direction laterally outwardly relative to the support.

The following embodiment of a fastening system is not according to the invention and can comprise: a support and a plurality of fastening elements; each fastening element having a fastener-support mating portion for engagement with a corresponding support-fastener mating portion of the support; the support having the corresponding support-fastener mating portions disposed therealong.

Preferably each fastener-support mating portion is configured for clip engagement with the corresponding support-fastener mating portion of the support.

Preferably the fastener-support mating portions each comprise a push fit portion configured to be pushed towards the corresponding support-fastener mating portion and engage therewith to hold the fastening element to the support.

Preferably the support comprises an elongate member having openings spaced along the support; the openings being spaced along an elongate side of the support that is opposite the support-fastener mating portions; each fastener-support mating portion having to be pushed through a corresponding one of the openings towards the corresponding support- fastener mating portion and engage therewith to hold the fastening element to the support.

Preferably the support comprises an elongate member having openings spaced along the support; the openings being spaced along an elongate side having the support-fastener mating portions therealong; each fastener-support mating portion having to be pushed through a corresponding one of the openings toward the corresponding support-fastener mating portion and engage therewith to hold the fastening element to the support.

Preferably the fastener-support mating portions each comprise a push fit portion configured to be pushed towards the corresponding support-fastener mating portion and engage therewith to hold the fastening element to the support.; each fastener-support mating portion and corresponding support-fastener mating portion providing a male clip portion and a female clip portion for clipping engagement.

Preferably each male clip portion includes two longitudinally extending portions and the corresponding female portion includes two longitudinally extending portions for receiving the longitudinally extending portions of the male clip portion therebetween.

Preferably each fastening element has a first end providing the fastener-support mating portion, and a second end providing a fastener-additional support mating portion (in other words, a fastener-panel member mating portion - panel members being referred to in the following as additional supports) the fastener-additional support mating portion being configured for engaging at least one inner surface of an additional support to apply an engaging force that is directed laterally outwardly, relative to the additional support, when the additional support is engaged by the fastener-additional support mating portion.

Preferably the support comprises an elongate member having openings spaced along the support; the openings being spaced along an elongate side of the support that is opposite the support-fastener mating portions; each fastener-support mating portion having to be pushed through a corresponding one of the openings towards the corresponding support- fastener mating portion, before the fastener-additional support mating portion extends through the opening, and engage with the support-fastener mating portion to hold the fastener to the support.

Preferably the support comprises an elongate member having openings spaced along the support the openings being spaced along an elongate side having the support-fastener mating portions therealong; each fastener-support mating portion having to be pushed through a corresponding one of the openings towards the corresponding support-fastener mating portion, after the fastener-additional support mating portion extends through the opening, and engage with the support-fastener mating portion to hold the fastener to the support.

Preferably the fastener-additional support mating portion is configured to apply a holding force that is sufficient to hold the additional support in position relative to the support, with the fastener-additional support mating portion holding the additional support with the fastener-support mating portion holding the support.

Preferably the fastener-additional support mating portion comprises an extension including members extending from the body of the extension towards the lateral boundary of the fastener; the members for bearing against the inner surfaces of an additional support to apply an engaging force in a direction laterally outwardly relative to the additional support.

Preferably each fastener-support mating portion comprises a base having a number of clip portions extending therefrom, the clip portions for engaging corresponding support- fastener mating portions; and the base for bearing against an outer surface of the support- fastener mating portions.

Preferably the fastening element is configured to extend beyond the cross-section of the support when the fastener-support mating portion is in engagement with a corresponding support-fastener mating portion of the support.

Preferably each fastener-support mating portion is less than one third of the height of the fastening element.

Preferably each support-fastener mating portion provides a channel having clip portions on both inwardly facing sides of the channel.

Preferably each support-fastener mating portion provides a channel having clip portions on both outwardly facing sides of the channel.

Preferably each fastener-support mating portion comprises a base that is of a greater width than the width of the channel, the base for bearing against an outer surface of the support-fastener mating portions.

Preferably the channel has a firm base to hold side portions of the channel together.

Preferably each fastener-support mating portion is configured for clipping engagement with the corresponding support-fastener mating portion.

The following embodiment of a fastening element is not according to the invention and can comprise: a fastener-support mating portion for clip engagement with a corresponding support-fastener mating portion of a support; and a fastener-additional support mating portion for engagement with a corresponding additional support-fastener mating portion of an additional support.

The following embodiment of a support is not according to the invention and can comprise: a support-fastener mating portion for clip engagement with a corresponding fastener- support mating portion of a fastening element.

Preferably the body of the fastening element has a cross section that has been extruded.

It is considered that preferred embodiments of the present invention provide a number of advantages, including the ability to manufacture support members and fastening elements as separate pieces. The fastening elements can be positioned within a support member at spaced apart locations therealong with the fastening elements being positioned by pushing the fastening elements through spaced apart openings provided along the support member.

The following embodiment of a fastening element is not according to the invention and can comprise: a body having a fastening end and an opposite end, the fastening end being configured for engaging a side wall of an elongate support with the body of the fastening element extending into the support from the fastening end at the side wall of the support towards the opposite end; the fastening end providing an opening for receiving an additional support.

Preferably the fastening end is configured for clip engagement with the side wall of the support.

Preferably the fastening element is manufactured by the process of extrusion and then machined to remove material and provide the fastening element. Preferably the fastening element comprises an extruded element.

Preferably the fastening end includes fastener-support mating portions comprising push fit portions configured to be pushed towards the side wall and engage therewith to hold the fastening element to the support.

Preferably the side wall comprises a thin walled section of the support.

Preferably the fastening end includes a rim for engaging the side wall of the support, the side wall of the support providing openings into the body of the support.

Preferably the rim is configured for collared engagement with the side wall of the support.

Preferably the rim provides a channel opening laterally outwardly; the channel for receiving an edge of the side wall of the support.

Preferably the body includes a number of side walls extending from the fastening end to the opposite end.

Preferably the body is rectangularly shaped and includes two
side walls extending from the fastening end to the opposite end.

Preferably the body includes a number of side walls extending from the fastening end to the opposite end, the side walls providing a walled structure assisting with limiting rotation of the further support when the further support is received through the fastening end.

Preferably the body includes a number of side walls extending from the fastening end to the opposite end, the side walls providing a walled structure assisting with providing rigidity to the fastening end of the body.

Preferably the body includes a number of side walls extending from the fastening end to the opposite end, the side walls providing a walled structure for housing or providing a fastener-support mating portion for receiving the additional support.

Preferably the fastener-support mating portion comprises a number of elements extending away from the side walls of the body in a direction laterally into the body and towards the opposite end of the body.

Preferably the fastener-support mating portion comprises a number of pairs of elements spaced apart towards the opposite end, each pair of elements comprising a first element on a side wall of the body and a second element on an opposite side wall of the body facing towards the first element.

Preferably the side wall and the opposite side wall of the body extend along the element.

Preferably the fastener-support mating portion is configured to provide an arrow structure having a number of elements extending toward the side walls of the body in a direction laterally outwardly and downwardly towards the opposite end of the body.

Preferably the opposite end includes a fastener-support mating portion for engagement with a second side wall of the support internal to the body of the support.

The following embodiment of a fastening system is not according to the invention and can comprise: a support and a plurality of fastening elements; each fastening element comprising: a body having a fastening end and an opposite end, the fastening end being configured for engaging a side wall of the elongate support with the body of the fastening element extending into the support towards the opposite end; the fastening end for receiving an additional support.

Preferably the opposite end of each fastening element includes a fastener-support mating portion at the opposite end of the fastening element; each fastener-support mating portion for engagement with a second side wall of the support opposite the side wall of the support.

Preferably the support includes corresponding support-fastener mating portions disposed along the second side wall of the support.

The following embodiment of a fastening system is not according to the invention and can comprise: a support; and a plurality of fastening elements; wherein each fastening element has an outer case configured to engage with a corresponding opening of the support; the support having the corresponding openings disposed on its surface.

Preferably each outer case is configured for collared engagement with each corresponding opening.

Preferably the support comprises an elongate member having the corresponding openings spaced therealong; each of the openings defining an edge; each outer case having to be inserted through a corresponding one of the openings and engage the edge to hold the fastening element to the support.

Preferably each outer case has a collared portion; the collared portion having a lower rim and an upper rim; the collared portion configured to be inserted through the corresponding opening and engage the edge of the corresponding opening between the lower rim and the upper rim.

Preferably the collared portion is located at an end of the outer case.

Preferably each outer case is inserted through the corresponding opening before engaging the edge to hold the fastening element to the support.

Preferably each outer case has a case opening, located at an end of the outer case facing away from the support, to allow access to a space housing a fastener-additional support mating portion; the fastener-additional support mating portion being configured to engage at least one inner surface of an additional support to apply an engaging force that is directed laterally outwardly, relative to the additional support when the additional support is engaged by the fastener-additional support mating portion.

Preferably the case opening is located at the collared portion of the fastening element.

Preferably the support comprises an elongate member having the corresponding openings spaced along an elongate side of the support; each of the outer cases configured for being inserted through each of the corresponding openings to engage the edge of the corresponding opening, to mount each of the outer cases to the support, and expose the fastener-additional support mating portion through each of the corresponding openings on the support.

Preferably the fastener-additional support mating portion is configured to apply a holding force that is sufficient to hold an additional support in position relative to the support, with the fastener-additional support mating portion holding the additional support with the outer case holding the support.

Preferably the fastener-additional support mating portion comprises a body having members extending from the body towards the lateral boundary of the fastener element, the members being configured to bear against the inner surfaces of an additional support to apply an engaging force in a direction laterally outwardly relative to the additional support.

The following embodiment of a fastening element is not according to the invention and can comprise: an outer case for collared engagement with a corresponding opening on a support; and a fastener-additional support mating portion for engagement with a corresponding additional support-fastener mating portion of an additional support.

It is to be recognised that other aspects, preferred forms and advantages of the present invention will be apparent from the present specification including the detailed description, drawings and claims.

### BRIEF DESCRIPTION OF DRAWINGS

In order to facilitate a better understanding of the present invention, several preferred embodiments will now be described with reference to the accompanying drawings, in which:
Figures 1a to 1h provide several views of a fastening system according to a first preferred embodiment of the present invention;
Figure 1i illustrates a panel mount and panel system according to alternative arrangement not part of the present invention.
Figures 2a to 2i provide several views of further embodiments of the present invention;
Figures 3a to 3h provide several views of further embodiments of the present invention;
Figure 4 illustrates a further embodiment;
Figures 5a to 5l and 6a to 6i provide several views of further embodiments of the present invention;
Figures 7 and 8 illustrate a fastening element according to a first preferred embodiment of the present invention.
Figures 9a to 9c provide a number of further views of the fastening element shown in Figures 1 and 2.
Figure 10 provides a view of the fastening element of Figures 7 and 8 when in engagement with a support.
Figure 11 provides a view illustrating the insertion of the fastening element of Figures 7 and 8.
Figures 12a and12b provide further views in relation to Figure 11.
Figure 13illustrates fitting on an additional support in relation to Figure11.
Figure 14 illustrates a fastening element according to another preferred embodiment of the present invention.
Figures 15a and 15b each illustrate a fastening element according to another preferred embodiment of the present invention.
Figure 16 illustrates a fastening element according to another preferred embodiment of the present invention.
Figures 17 to 20 illustrate further preferred embodiments of the present invention.

### DETAILED DESCRIPTION OF THE EMBODIMENTS:

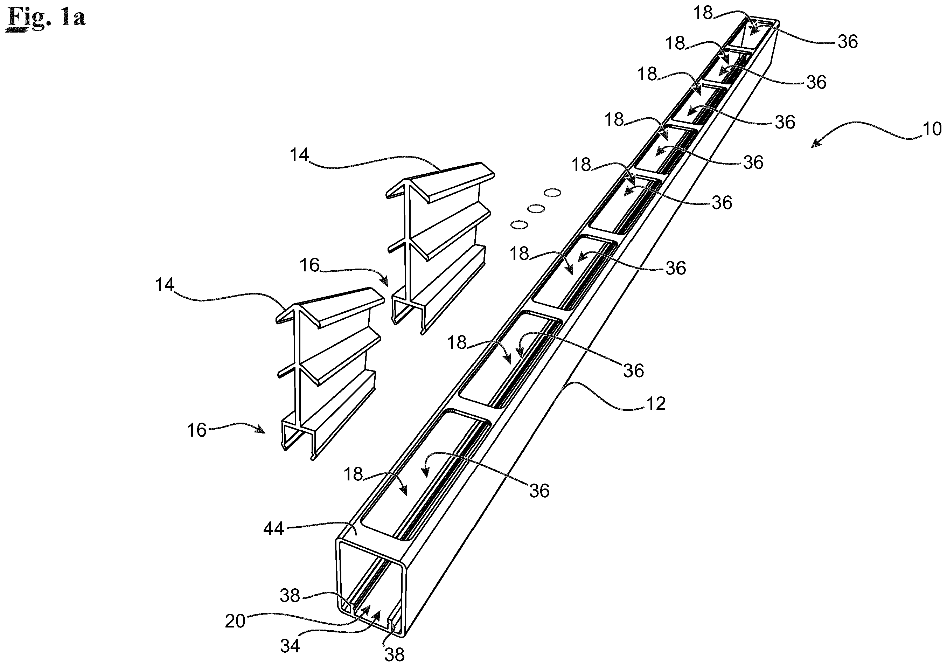

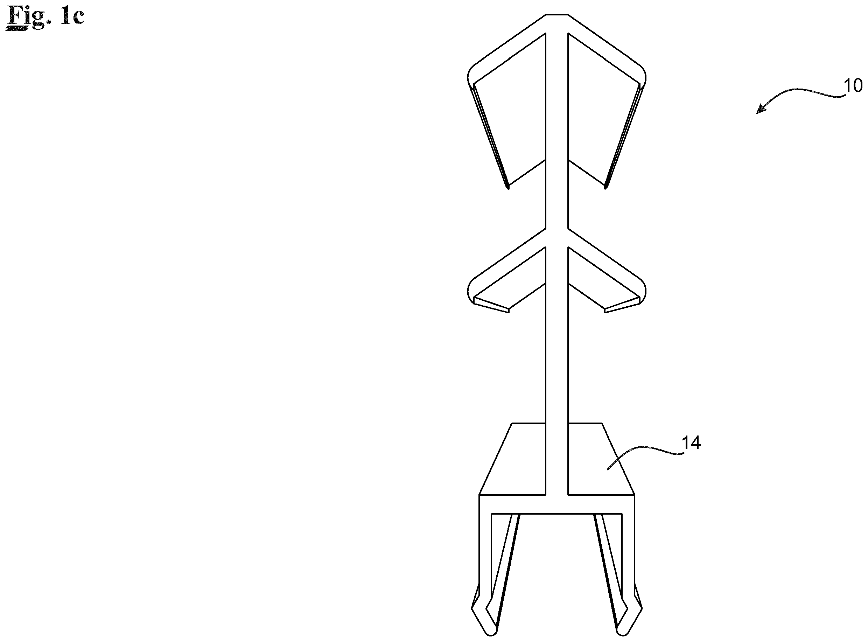

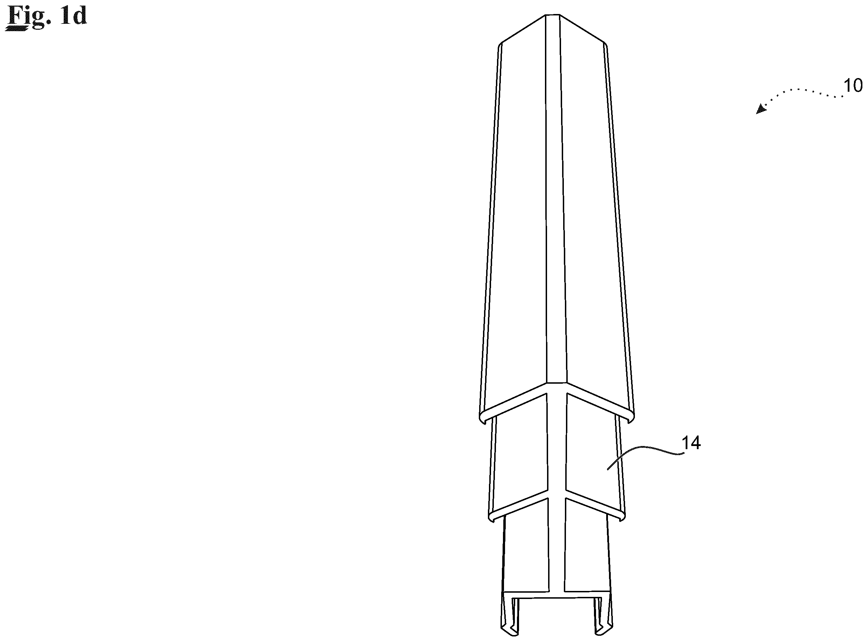

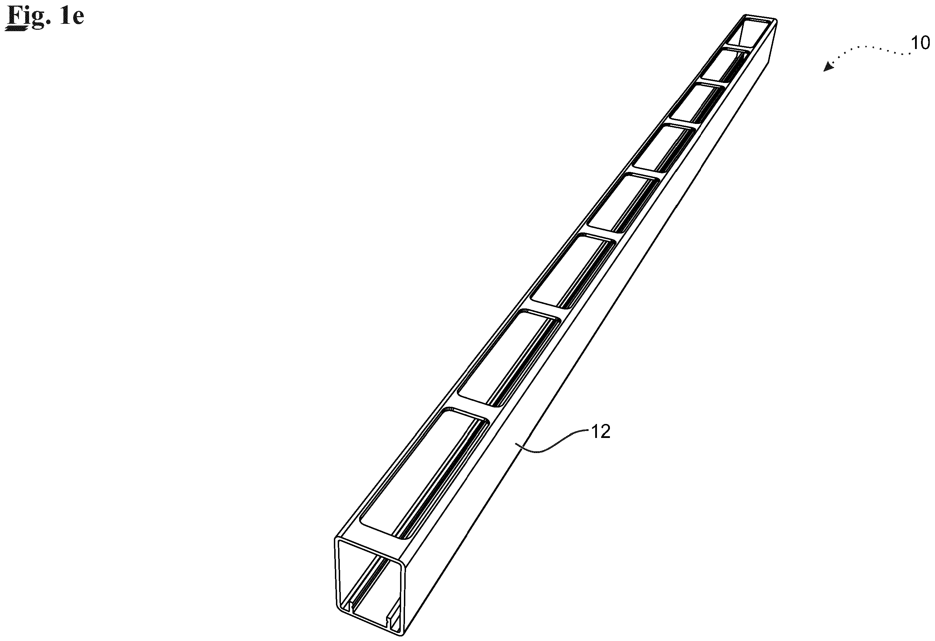

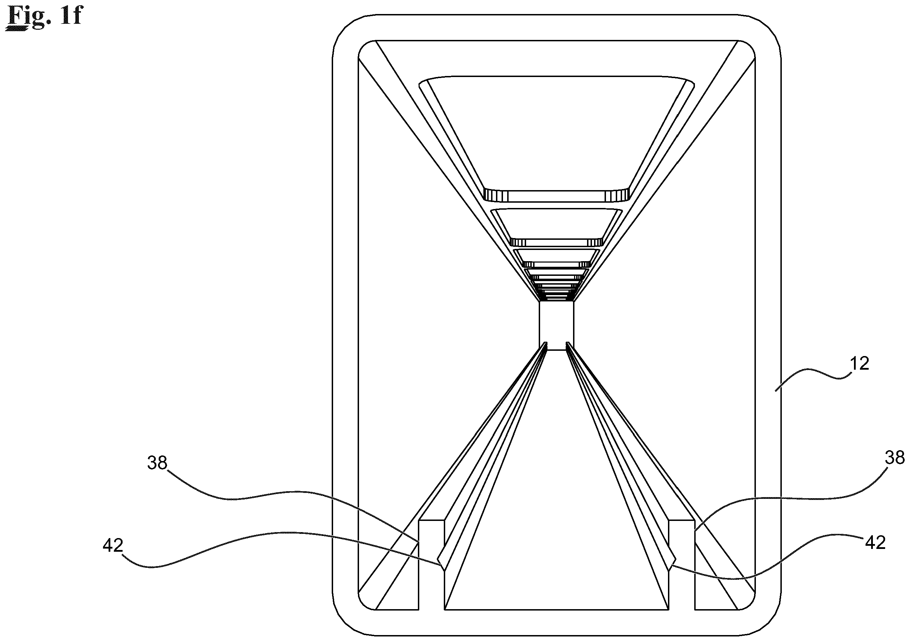

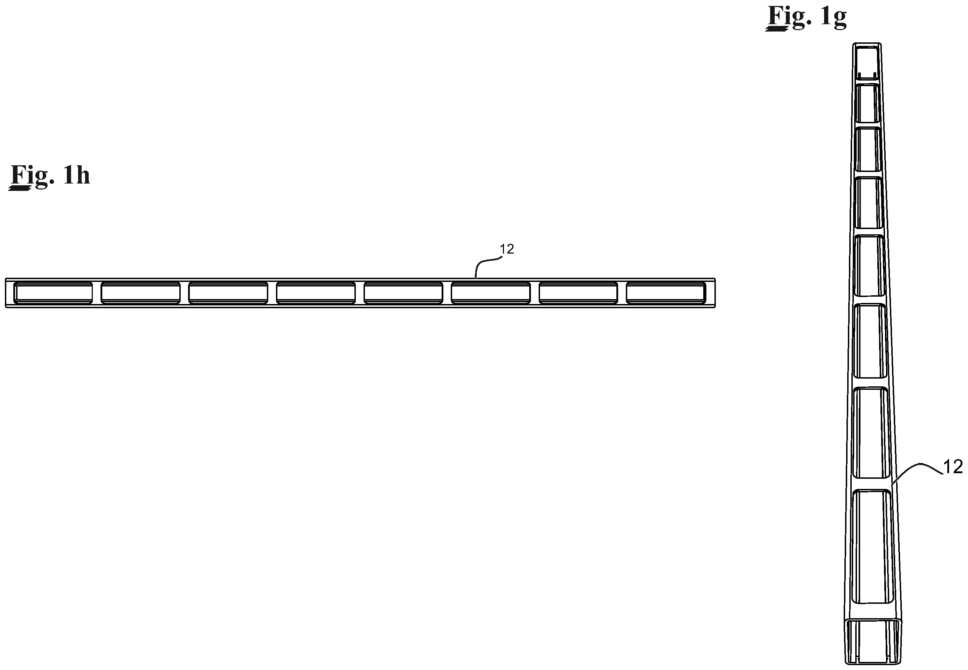

### Drawings: Figures 1a to 6i (Separate Fastener)

Figures 1a to 1h provide several views of a panel mount 10 according to a first preferred embodiment of the present invention. As will be described in further detail below, the panel mount 10 has supports and fastening elements that are each advantageously manufactured as individual pieces in an extrusion process. The fastening elements are able to be positioned within the support at spaced apart locations there along. The fastening elements are readily positioned by pushing the fastening elements through spaced apart openings in the support. The fastening system is considered to be suited to the construction of fences, screens, roofing, awnings and many other structures. The applicability of the system is considered to extend beyond these fields.

As detailed in the Figure 1a, the panel mount 10 includes a support 12 and a plurality of fastening elements 14. Each fastening element 14 has a fastener-support mating portion 16 for engagement with a corresponding support-fastener mating portions 18 of the support 12. The support-fastener mating portions 18 are disposed along the support 12. More particularly each fastener-support mating portion 16 is configured for clip engagement with the corresponding support-fastener mating portion 18 of the support 12. The fastener-support mating portions 16 are provided as U-shaped structures each with two downwardly extending flanges that run along the length of the fastening element 14 on either side. The support-fastener mating portions 18 provide a channel 20 into which the faster-support mating portions 16 fit.

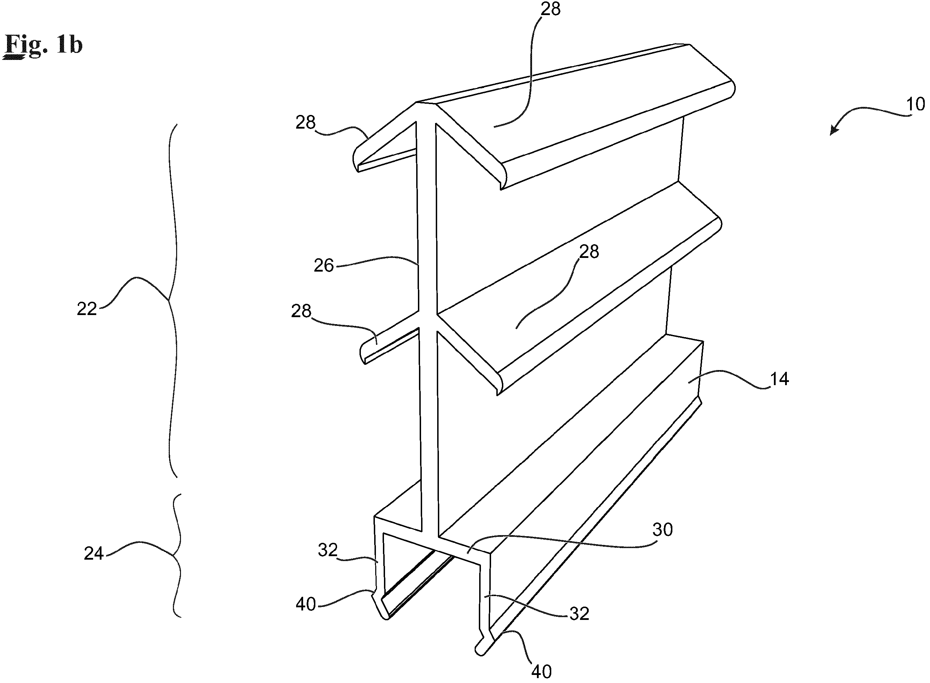

Referring to Figure 1b, each fastening element 14 includes an upper portion 22 and a lower portion 24. The lower portion 24 provides the fastener-support mating portion 16. The lower portion 24 is of a much smaller height in comparison to the upper portion 22.

The upper portion 22 accords with structures described in Australian Provisional Application 2016902172. The upper portion 22 includes an extension 26 that extends upwardly from the lower portion 24. A number of downwardly extending side portions 28 extend from the extension 26. The lower portion 24 provides a base 30 from which two portions 32 extend downwardly. The base 30 is substantially perpendicular to the height of the fastening element 14.

The lower portion 24 provides a portion that is able to mate with the support-fastener mating portions 18. The support-fastener mating portions 18 provide a continuous support-fastener mating portion 34. The continuous support fastener mating portion 34 spans the length of the support 12. The support 12 can be extruded as one length following which material can be removed to provide openings 36 spaced there along.

Each support-fastener mating portion 18 corresponds with an opening 36 that is provided in the support 12 above the support-fastener mating portion 18. Two continuous clip portions 38 extend along the length of the support 12 to provide the support-fastener mating portions 18.

Advantageously the fastening elements 14 are able to be manufactured by the process of extrusion. The support 12 can be manufactured by the process of extrusion coupled with the provision of the openings 36 by milling or otherwise. Australian Provisional Application 2016902172 describes structures where the fastening elements 14 are integral with the support 12. The applicant is not aware of any systems having push fit fastening elements 14 that engage with a support 12 as described and which provide a fence, gate or otherwise.

The fastener-support mating portions 16 each comprise a fastener-support mating portion 16 that provides a push fit portion 24 that is configured to be pushed towards the corresponding support-fastener mating portion 18 and engage therewith to hold the fastening element 14 to the support 12.

The push fit nature of the panel mount 10 is considered to be advantageous for the reason that no additional screws or rivets are required to secure the fastening elements 14 to the support 12 through the openings 36. The ability to remove material only to the depth of the thickness of the side wall is also considered advantageous.

The portions 32 each include a clip projection 40 that extends laterally away from the body of the lower portion 24. The clip portions 38 each include a recess 42 into which the projections are received when the corresponding fastening element 14 is push fit into the support-fastener mating portion 18. The recesses 42 open laterally into the channel 20.

As described and shown, the support 12 comprises an elongate member having openings 36 spaced along the support 12 The openings are spaced along an elongate side 44 of the support 12 that is opposite the support-fastener mating portions 18.

In order to attach a fastening element 14 to the support 12, the fastener-support mating portions 16 are each pushed through a corresponding one of the openings 36 towards the corresponding support-fastener mating portion 18 and engage therewith to hold the fastening element 14 to the support 12. The person constructing the gate (or otherwise) holds a fastening element 14 in his or her hand, and forces the fastening element 14 through an opening 36 to engage with the support-fastener mating portion 18 thereby firmly holding the fasting element 14 to the support 12.

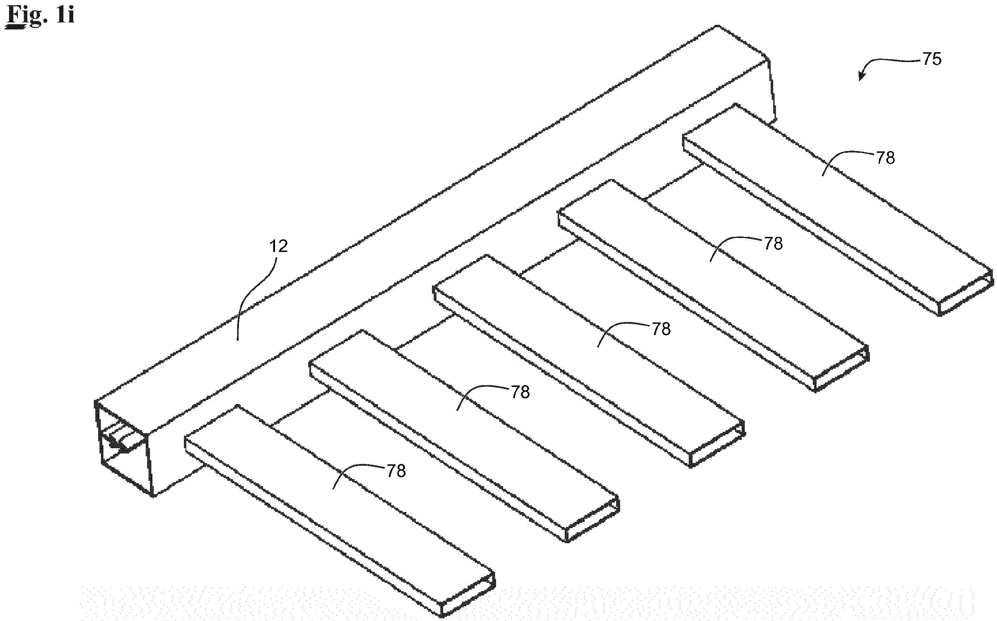

Figure 1i illustrates a panel system 75 having fastening elements fixed to the support 12. The panel system 75 includes a support 12 and panel members 78. The fixed fastening elements are not according to the invention and are present for illustrating the arrangement of the panel members 78 only.

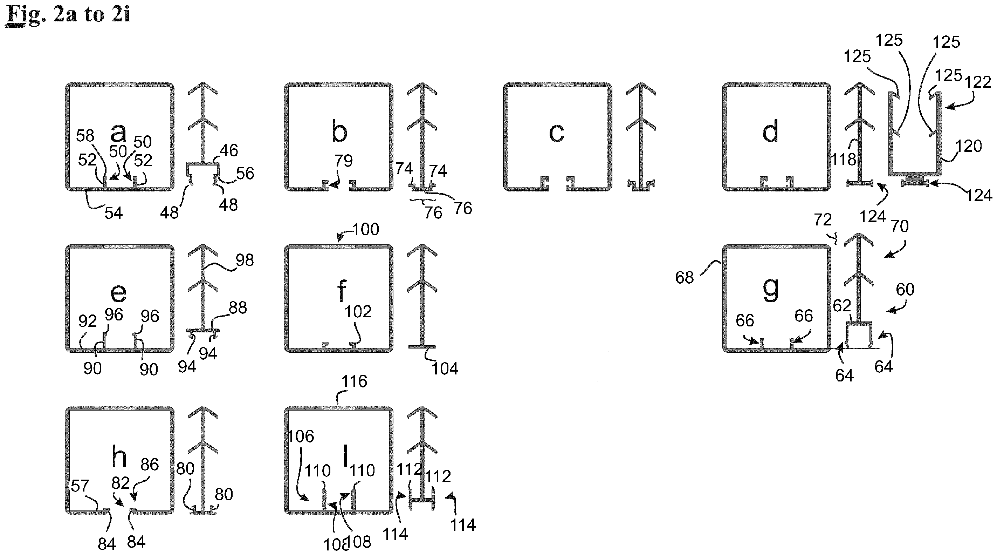

A number of other possible embodiments envisaged by the inventors are illustrated in the cross sections of Figures 2a to 2i. Each figure shows a cross section where the part extends out of the page.

The embodiment of Figure 2a includes a base 46 having arms 48 that are configured to clip into grooves 50 that are provided by two abutments 52. The abutments 52 extend upwardly from a floor 54. The base includes downwardly facing portions 56 for resting on the upper face of the abutments 52. The embodiment of Figure 2g is similar to the embodiment of Figure 2a. In Figure 2a the base is however configured to rest on the upper surface 58 of the abutments.

In connection with the embodiment of Figure 2g the fastener-support mating portion 60 comprises a base 62 having a number of clip portions 64 extending from opposite lateral sides of the base 62. The clip portions 64 are provided for engaging corresponding support-fastener mating portion 66 of the support 68.

In the case of Figure 2g, the fastening element 70 is configured to extend beyond the cross-section of the support 68 by a distance 72 when the fastener-support mating portion is in engagement with the corresponding support-fastener mating portion 66 of the support 68. As before, the fastener-support mating portion 60 is less than one third of the height of the fastening element 70. Unlike the embodiment of Figure 2a the base is not of a greater width than the channel and does not rest on the upper surface of the support- fastener mating portions.

The embodiment of Figure 2b includes two portions 74 that allow a laterally extending portion 76 to fit within a channel 79. In this embodiment, the rear of the channel includes a series of I type openings and the portions 74 form an I shape when viewed from above. It is considered that some flexing might be provided in the portions 74. Nonetheless, this would not be sufficient for fitting within the opening if the opening was of a continuous width. The embodiment of Figure 2c is similar to that of Figure 2b. In Figure 2c the portions are T shaped.

Figure 2h includes flexible clip portions 80 that flex inwardly when inserted through an opening 82. The opening 82 is provided in the base 57 of the support. The flexible portions 80 engage against the surface 84 of an abutment 86. The abutment 86 serves to push the clip portions 80 inwardly before clipping into position. The clip portions 80 and upper surfaces of the abutment 86 bear against one another to secure the fastening element in position.

In the embodiment of Figure 2e, a base 88 is provided for resting on two abutments 90. The abutments 90 extend from a floor 92. The abutments 90 provide clip portions 90 which bend laterally outwardly when clipping arms 94 of the fastening element are pushed between the abutments. More specifically the clip portions 90 flex laterally outwardly and snap back into position with tab portions 96 preventing separation of the fastening element 98. The applicant has constructed a number of 3d printed plastic versions of the embodiment of Figure 2e. When made from plastic the locking has been seen to be sufficient to hold the fastening element to the support under action of hand pressure. Extruded embodiments made from aluminium are yet to be tested. It is anticipated that the extruded embodiments will function in a similar manner and provide a tighter holding of the fastening element to the support.

The embodiment of Figure 2f is somewhat similar to that of Figure 2b. In the embodiment of Figure 2f, however, the fastening element is inserted through an opening 100 that is provided on an opposite side of the support to the side having the support-fastener mating portions 102. A corresponding I-shaped structure is provided in the mating portion 102 and the base 104.

The embodiment of Figure 2i provides a support-fastener mating portion 106 that includes a number of small grooves 108 in two opposite abutments 110. The grooves 108 are provided so that they face laterally inwardly. The fastening element includes two abutments 112 having grooves 114 that face laterally outwardly and which are configured to fit into the grooves 108. The abutments 112 and the abutments 110 have matching grooves that slide past one another as the fastening element is pushed downwardly through an upper opening 116.

Figure 2d shows a fastening element 118 and a fastening element 120. The fastening element 120 has engagement portions 125 configured to provide an inwardly directed lateral engagement force to an additional support member that is connected to the end 122 spaced away from the fastener-support mating portions 124. This is in comparison to the fastening element 118 which provides an outwardly directed lateral engagement force to an additional support member. The use of fastening element 120 is not presently preferred for the reason that scratching could be made to the outer surface of an additional support member when received within the fastening element 120. Whilst the fastening elements having outwardly directed additional support member engaging portions are preferred, embodiments having inwardly directed engaging portions are possible.

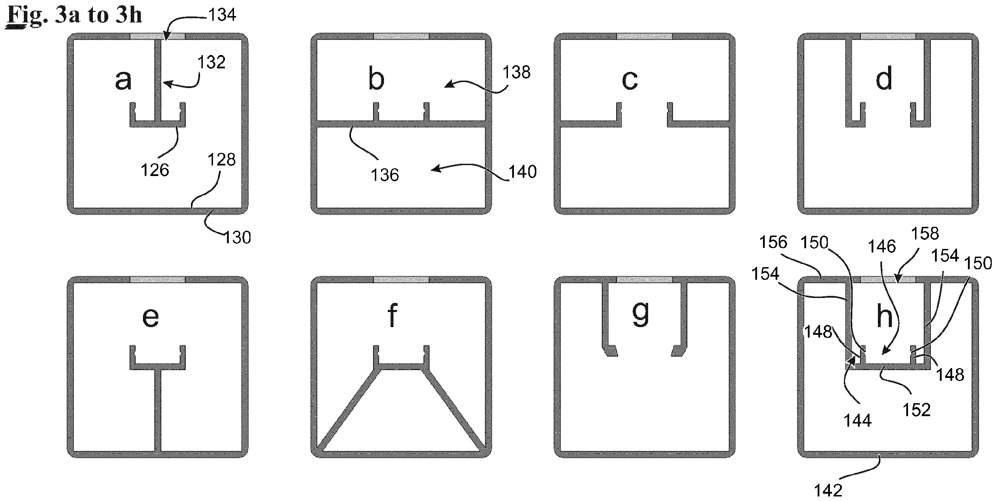

Figures 3a to 3h illustrates support-fastener mating abutments that are positioned above the floor of the support member opposite the opening. For example, the embodiment of Figure 3a illustrates a support-fastener mating abutment 126 that is positioned above the floor 128 of the support member 130. The support member 130 includes an extension 132 that extends along the support and which is milled out beneath each opening 134. This allows a fastening element to be received between alternating extensions 132 within the support-fastening mating abutment 126.

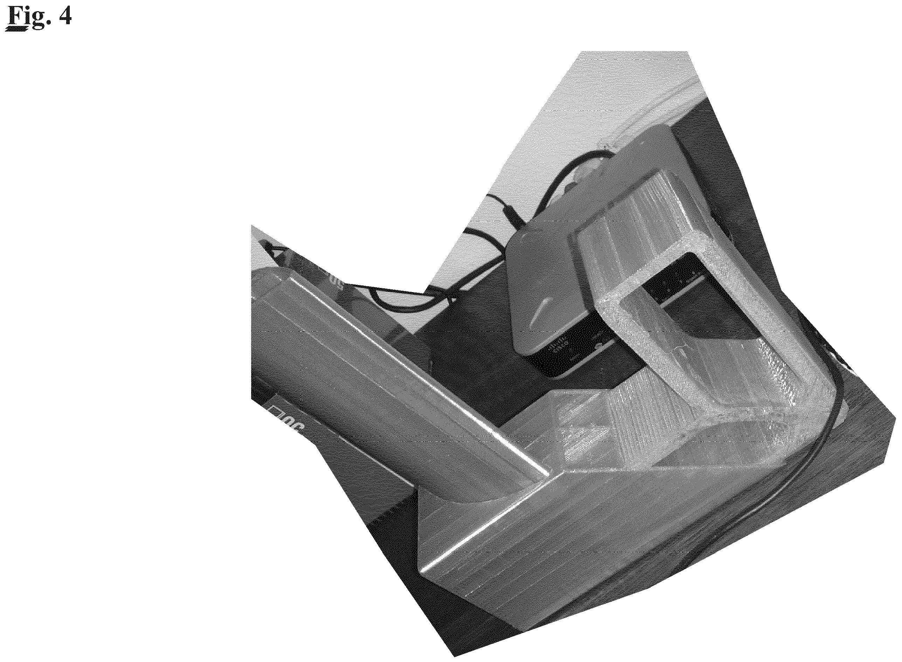

The embodiment of Figure 3b comprises an extension 136 that extends across the support to provide an upper channel area 138 and a lower channel area 140. This provides a system similar to that shown in Figure 4 in that an upper and a lower channel area are provided. Embodiment having an upper channel area 138 and the lower channel area 140 are considered to be advantages for corner connections. The applicant is presently preparing a patent application directed to the provision of multiple channels. In the embodiment of Figure 4, the double channel allows for a corner joint (as illustrated) to be provided in the lower channel area 140 beneath the support-fastener mating portion abutments which are disposed thereabove.

The embodiment of Figure 3h provides a support 142 having a support-fastener mating portion 144 that provides a channel 146 having abutments 148 with clip portions in the form of two opposing grooves 150 both on inwardly facing sides. The channel 146 has a base 152 that holds the support-fastener mating portions 144 together when a corresponding fastening element is inserted in the channel 146. Two portions 154 extend from the base 152 to the side 156 providing an opening 158.. This is in comparison to Figure 3d wherein the side portions of the channel are not provided with a base that forms a closed channel beneath the openings.

Whilst presently preferred mechanical inversions are possible where the fastener-support mating portions provide a female clip and clip portions are provided on both outwardly facing sides of the channel. In addition a mechanical inversion is possible where the grooves comprises projections and the projections comprise grooves.

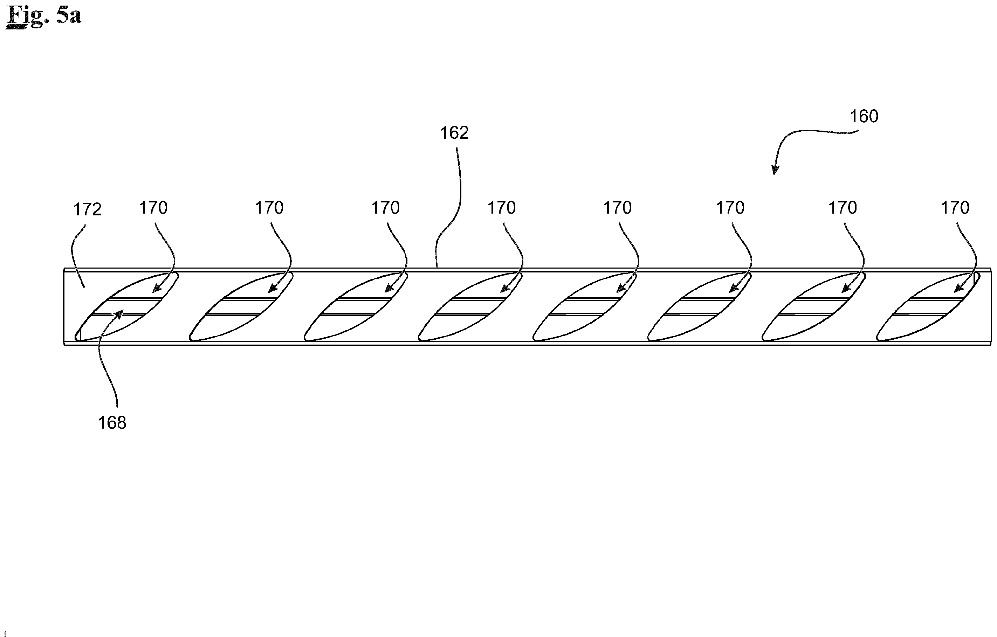

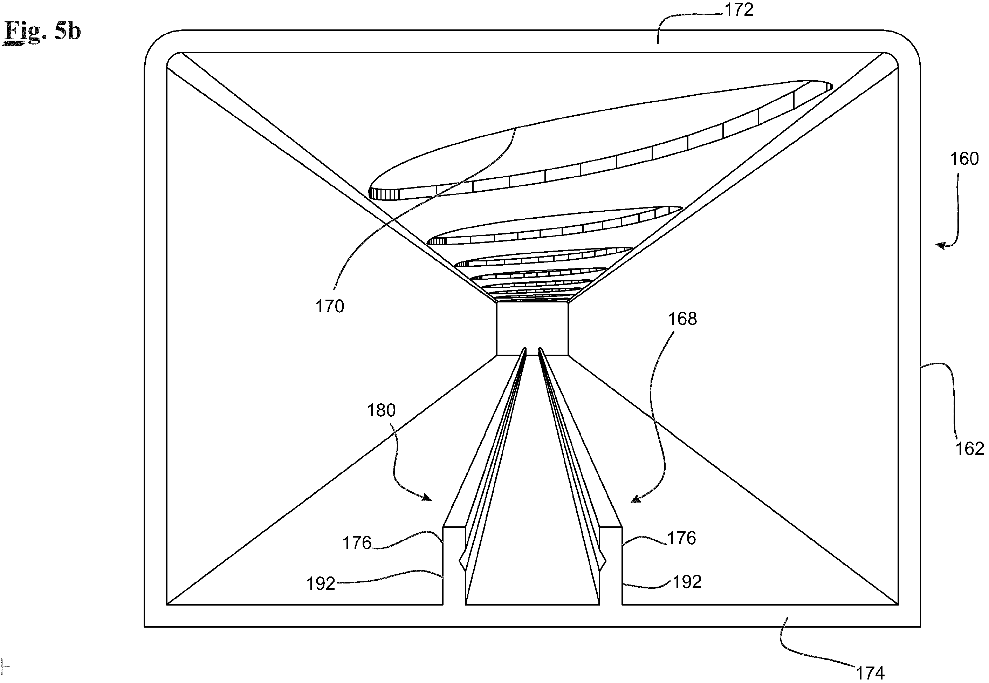

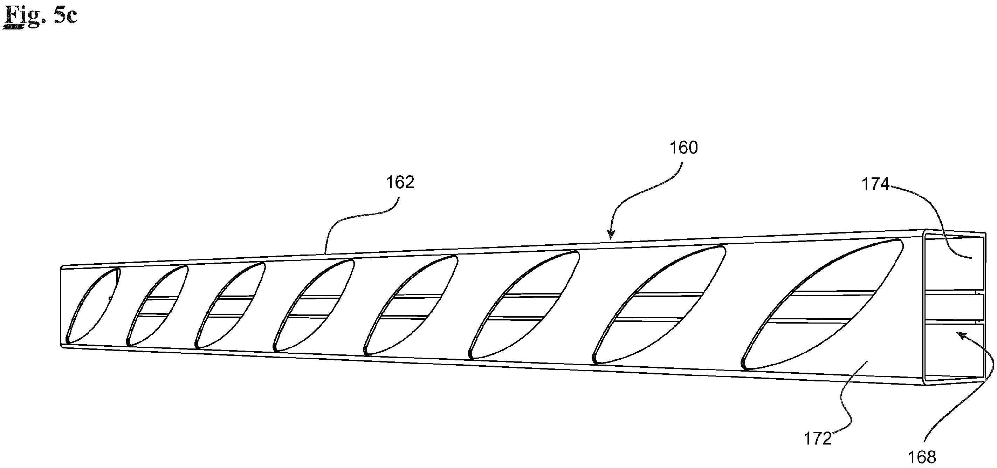

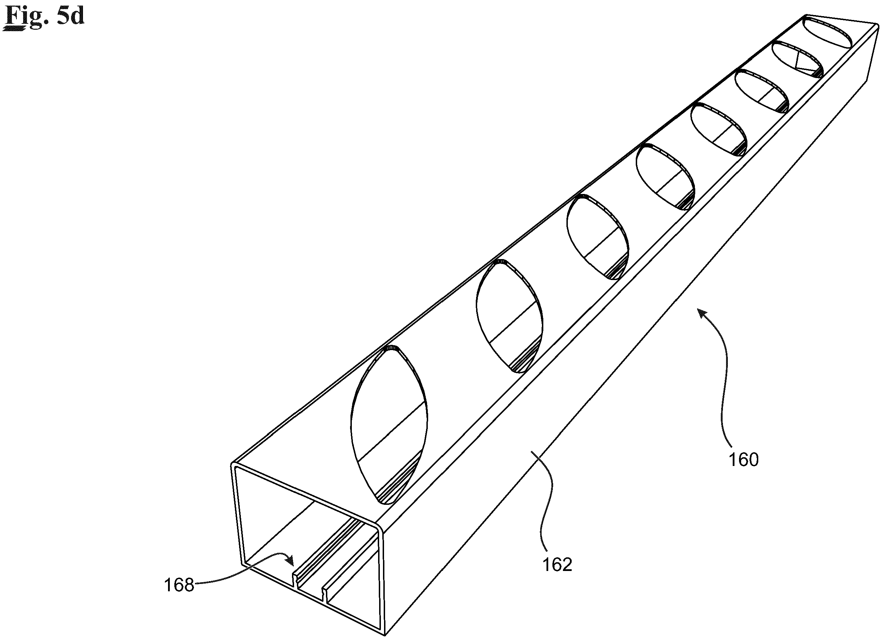

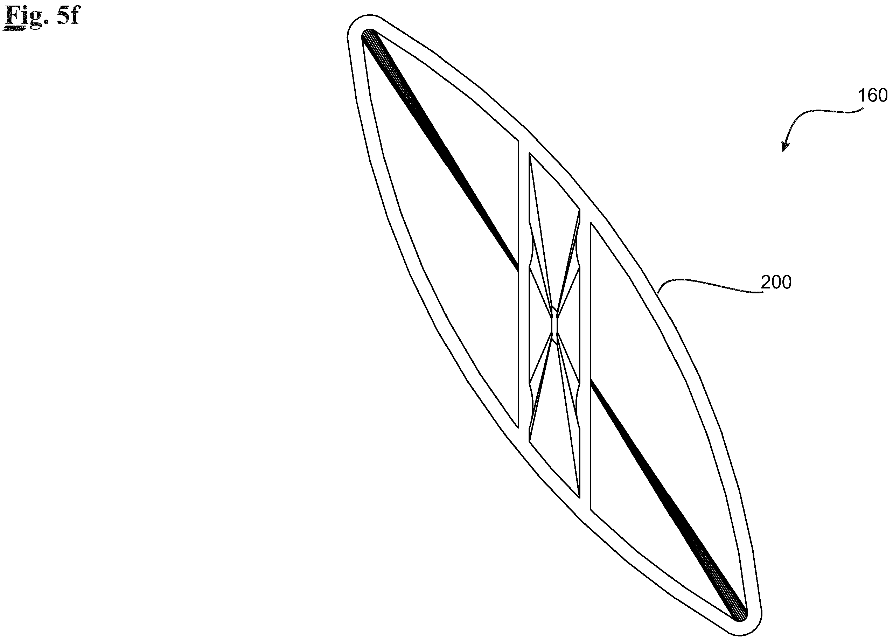

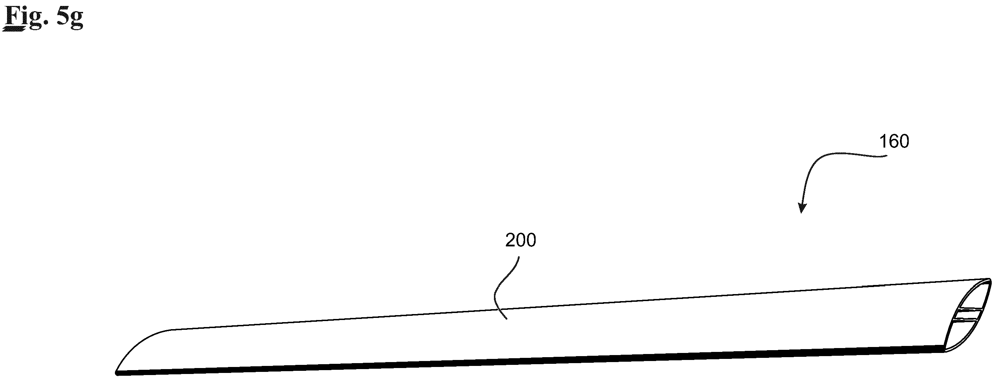

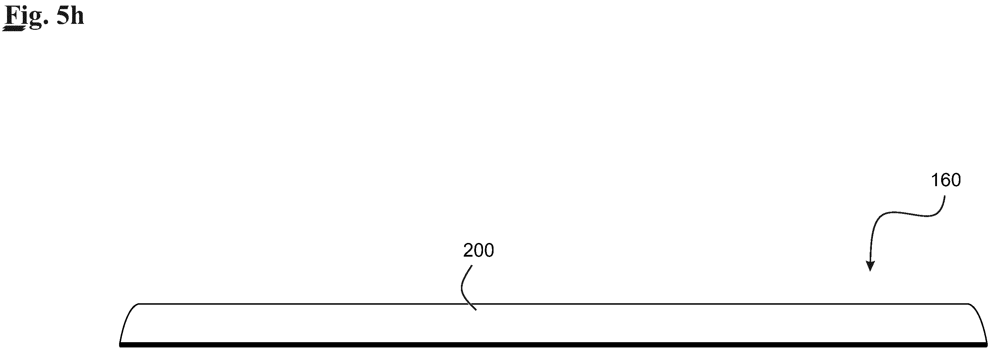

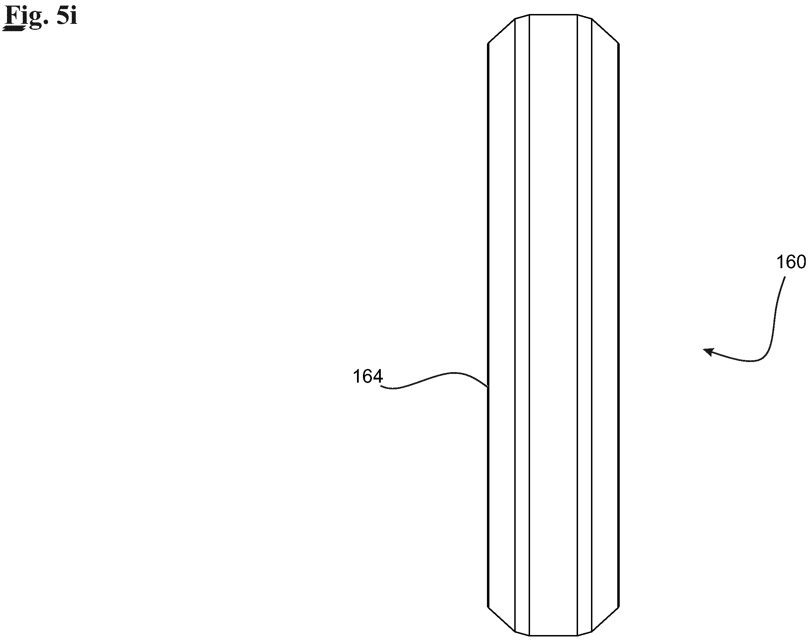

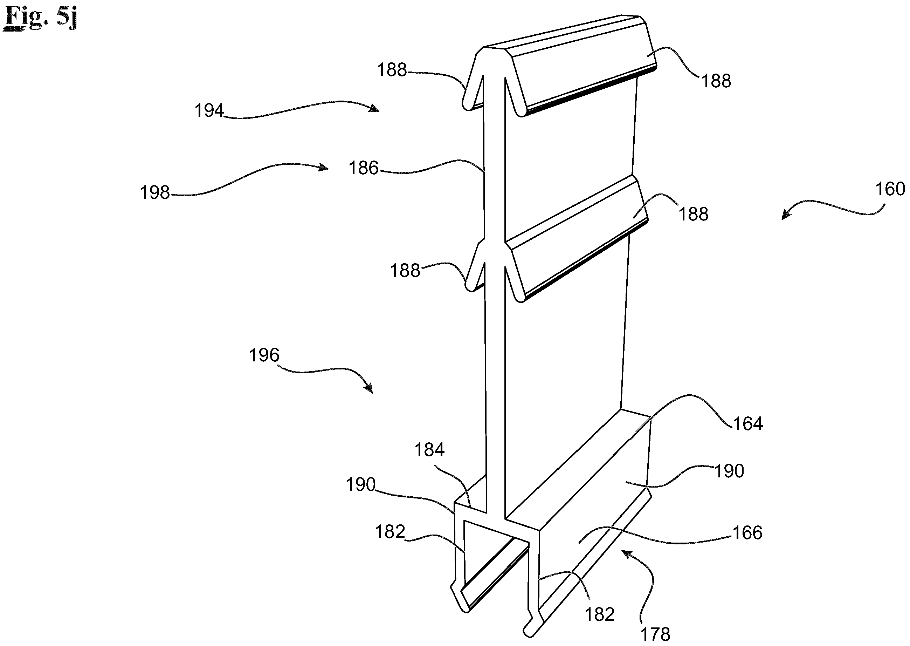

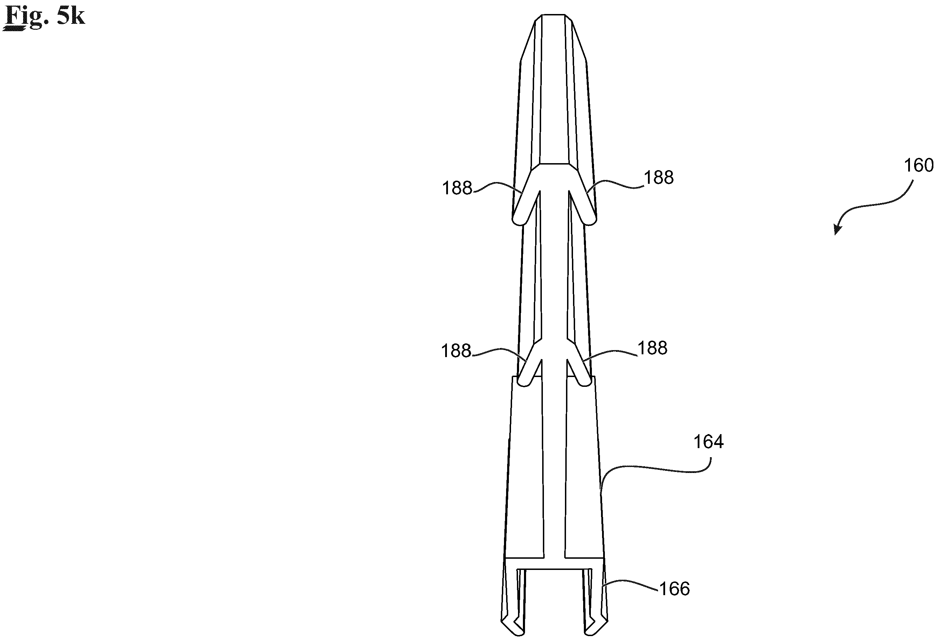

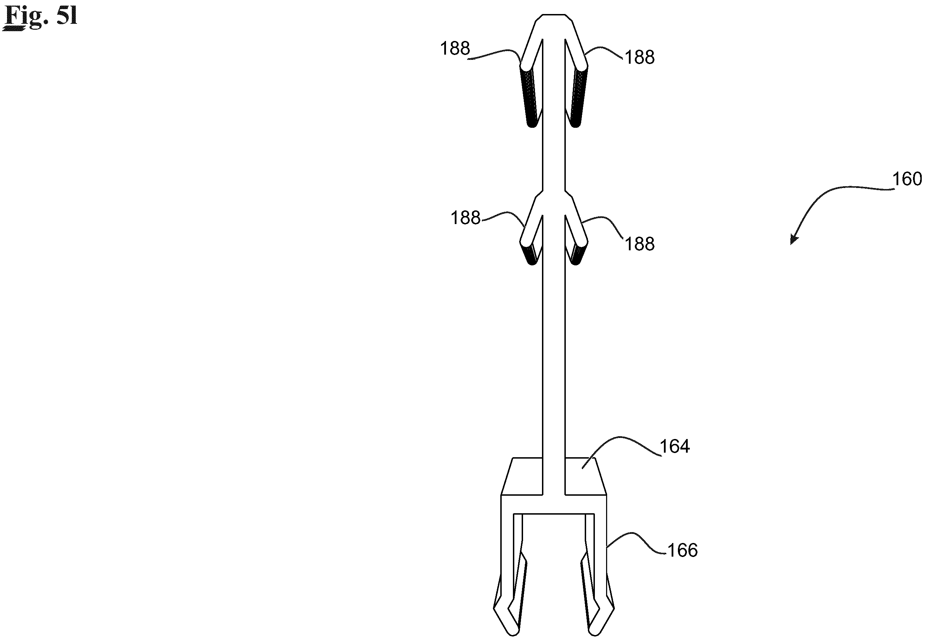

Figures 5a to 5l illustrate a fastening system 160 according to a further preferred embodiment of the present invention. As before there is provided a support 162 and a plurality of fastening elements 164. Each fastening element 164 has a fastener-support mating portion 166 for engagement with a corresponding support-fastener mating portion 168 of the support 162.

The support 162 has the corresponding support-fastener mating portions 168 disposed therealong. The support comprises an elongate member having openings 170 spaced along the support 162. The openings 170 are spaced along an elongate side 172 of the support 162. An opposite side 174 provides the support-fastener mating portions 168 there along. Each fastener-support mating portion 166 has to be pushed through a corresponding opening 170 towards the corresponding support-fastener mating portion 168 and engage therewith to hold the fastener 164 to the support 162. Removal of material from the extrusion of the support 162 only has to occur to the depth of the thickness of the elongate side 172.

The openings 170 comprises elliptically shaped openings 170 arranged at an angle to the length of support-fastener mating portions 168. The length of support-fastener mating portions 168 provides two longitudinally extending substantially parallel abutments 176 that extend along the length of the support 162.

The fastener-support mating portions 166 each comprise a push fit portion that is configured to be pushed towards the corresponding support-fastener mating portion 168 and engage therewith to hold the fastening element 164 to the support 162. Each fastener- support mating portion 166 and corresponding support-fastener mating portion 168 can be considered as providing a male clip portion 178 and a female clip portion 180 for clipping engagement. Mechanical inversions where fastener-support mating portion provides a female clip portion and the support-fastener mating portion 168 provides a male clip portion are of course possible.

In this embodiment the male clip portion 178 comprises a lower end of the fastening element 164. The male clip portion 178 comprises two arms 182 that extend downwardly from either side of a base 184. The base 184 is arranged perpendicularly to the height of the fastening element 164. The arms are arranged parallel to the height of the fastening element 164. An extension 186 extends upwardly from the base 184 and has several downwardly directed extensions 188 extending therefrom as shown in the drawings.

Along its length, the male clip portion 178 can be considered as providing two longitudinally extending portions 190 that provide the arms 182. The female clip portion 180 can be considered as comprising two longitudinally extending portions 192 for receiving the longitudinally extending portions 190 of the male clip portion 178 therebetween. The longitudinally extending portions 190 are spaced apart for clipping engagement between the longitudinally extending portions 192.

In this embodiment, each of the portions 190 are configured to flex laterally inwardly and the portions 192 are configured to flex laterally outwardly as the male clip portion 178 is inserted into the female clip portion 180. This is achieved by the provision of clip portions having surfaces that bear against each other and provide the clipping engagement.

During insertion portions 190 and, 192 slide past one another and then clip in position by provision of the grooves and nibs (shown in the drawings). When fully inserted the portions 190 and 192 spring to their original positions, to which they are biased. As would be apparent various forms of clipping arrangements are possible.

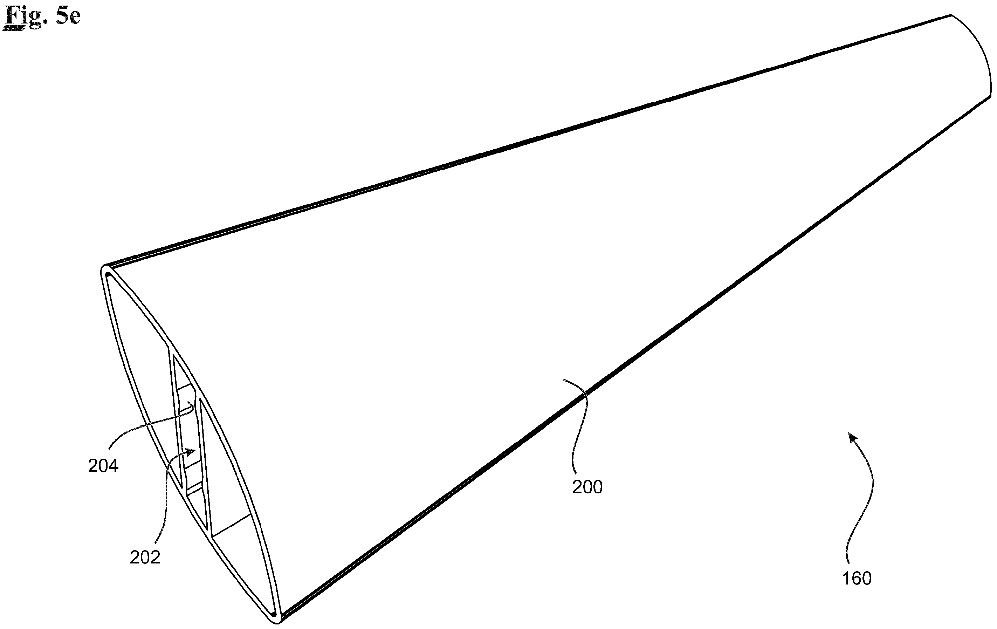

In the embodiment each fastening element 164 has a first end 194 and a second end 196. The second end 196 provides the fastener-support mating portion 166. The first end 194 can be considered as providing a fastener-additional support mating portion 198. The fastener-additional support mating portion 198 is configured for being inserted into an additional support 200 shown in Figure 5e. The first end 194 is received within a channel 202 to engage at least one inner surface 204 of an additional support as described in Australian Application 2016902172 filed 3 June 2016. The arms 182 of the fastener- additional support mating portion 198 are configured to apply an engaging force that is directed laterally outwardly, relative to the additional support 200, when the additional support is engaged by the fastener-additional support mating portion 198.

The support 162 comprises an elongate member 162 having openings 170 spaced therealong. The openings 170 are spaced along an elongate side 172 of the support that is opposite the support-fastener mating portions 168. Each fastener-support mating portion 166 must be pushed through corresponding openings 170 towards the corresponding support-fastener mating portion 168 before the fastener-additional support mating portion 198 extends through the opening. This is because the openings 170 are arranged on the elongate side 172. In some embodiments the fastener-additional support mating portion 198 is positioned beyond the support 162 and the corresponding opening 170. This is considered to be advantageous in terms of possibly providing increased strength and limiting movement of an additional support (when fitted) in the opening. With such an arrangement, the fastening element will extend further into the additional support 200.

The arms 188 are configured to apply a holding force that is sufficient to hold the additional support 200 in position relative to the support 162. The fastener-additional support mating portion 198 holds the additional support with the fastener-support mating portion 166 holding the support 162.

The fastener-additional support mating portion 198 comprises an extension including the arms extending from the body of the extension towards the lateral boundary of the fastener. As described, the arms 188 are configured for bearing against the inner surfaces of an additional support to apply an engaging force in a direction laterally outwardly relative to the additional support.

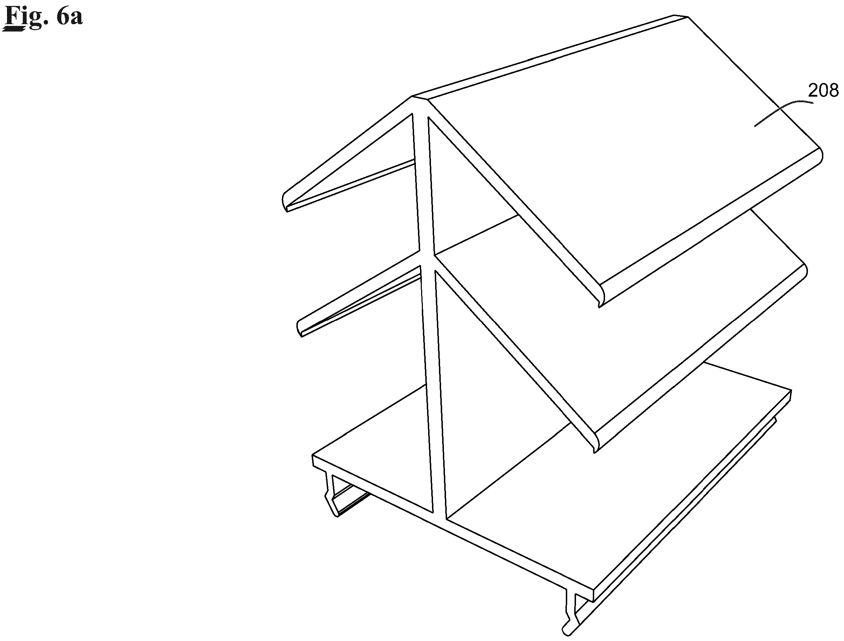

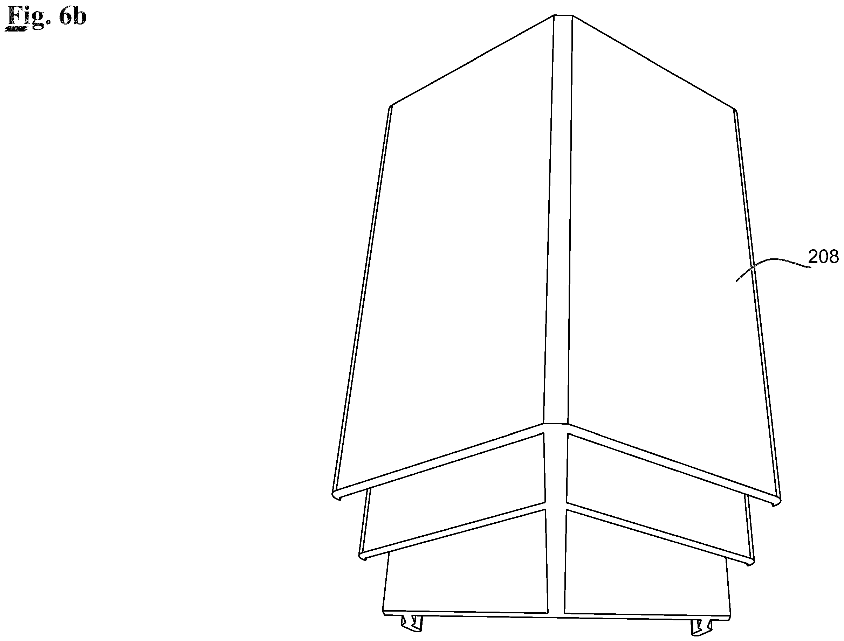

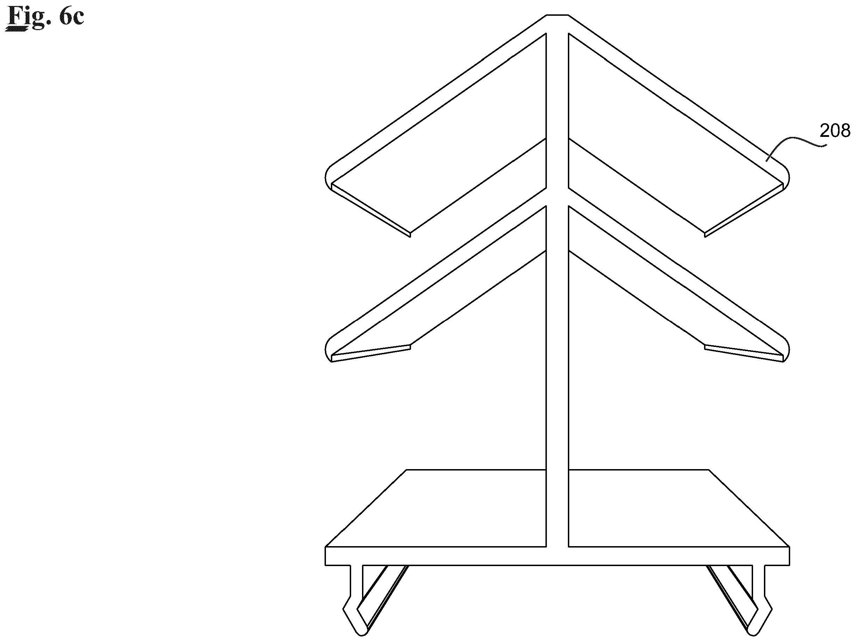

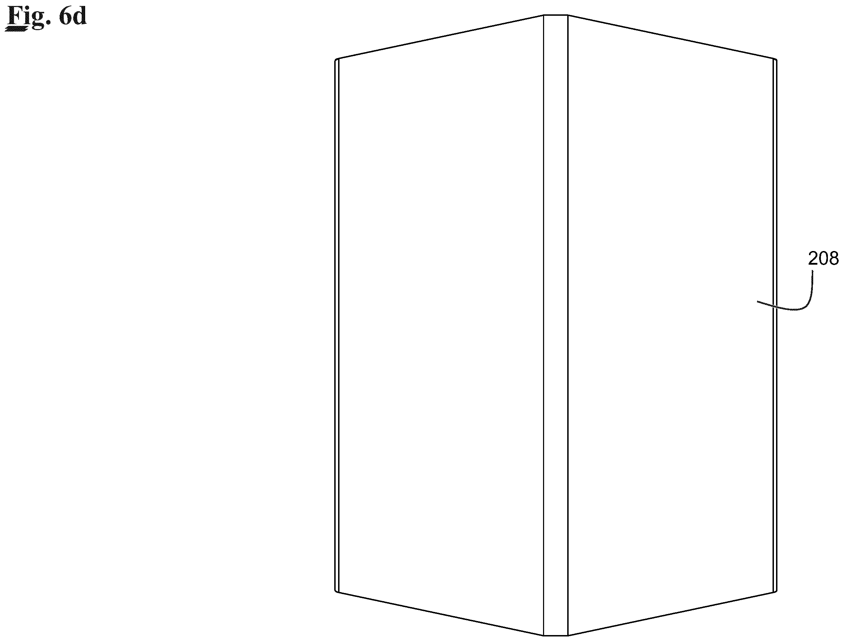

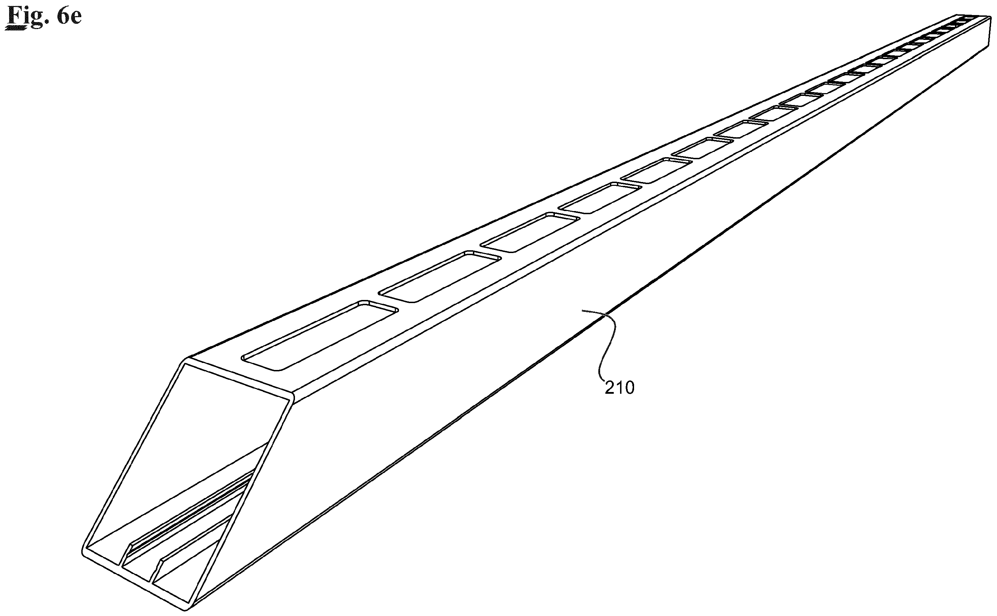

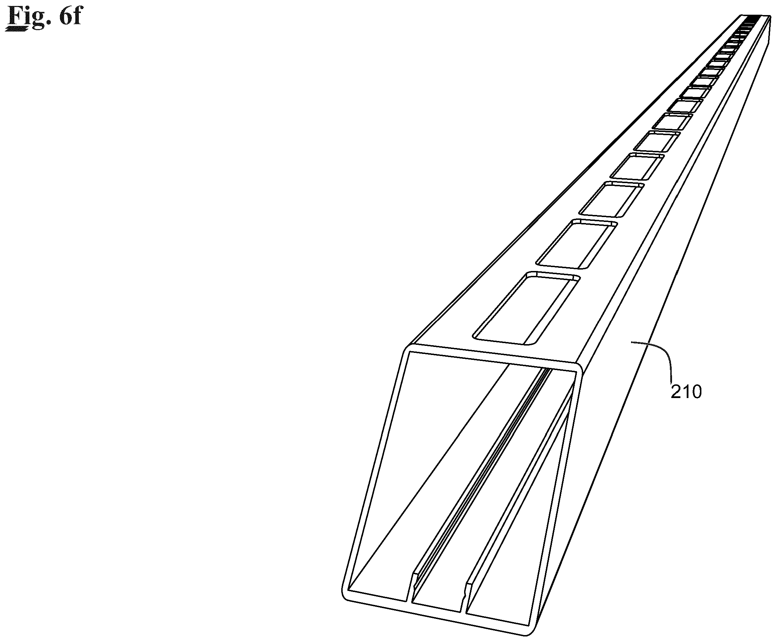

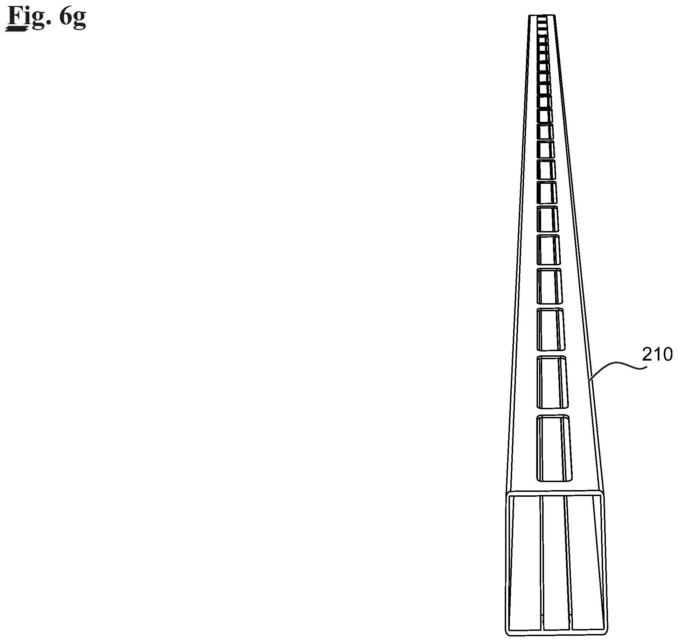

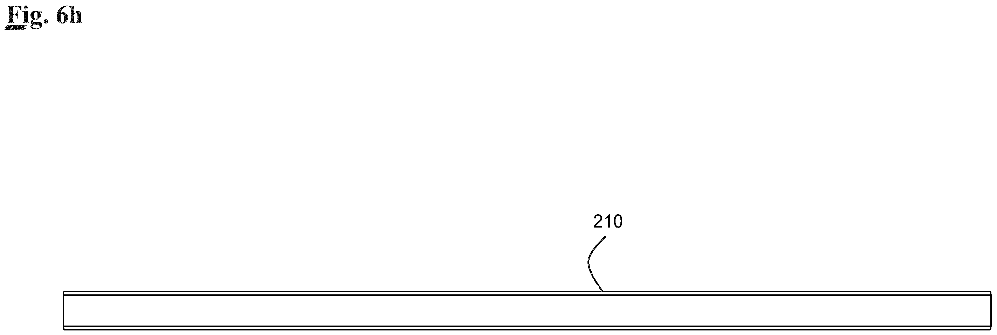

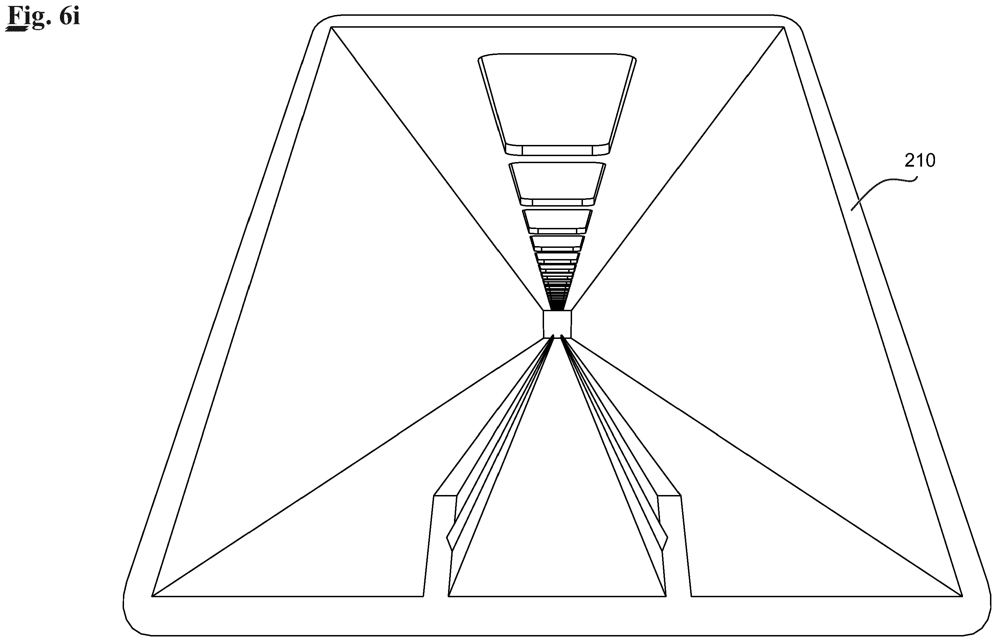

Each fastening element 164 is considered to provide an embodiment of the present invention in its own right. For example, Figure 6a illustrates a fasting element 208 of a greater width to length ratio than those previously described. Figure 6e shows a support 210 that is considered to provide a further embodiment of the present invention in its own right. The supports in this embodiment provide panel members for forming gates and fences, where the panel members can be arranged to form gates and fences. Other embodiments may have the panel members at different angles as described in Australian Provisional Application 2016902172

It is considered that a number of preferred embodiments have been described which provide an advantageous panel mounting system that can be used in the provision of gates and fences. It is further considered that the embodiments may find application in other areas including shelving construction. The fastening elements are able to be extruded from materials including plastics and aluminium. The support members are able to be extruded with the openings being machined at a later date. Other construction methods are of course possible.

As would be apparent, the fastening elements are provided with an arrow head and a U-shaped end. The base is able to be inserted through openings in the support to engage with the corresponding portions in the support. The provision of a U-shaped end is considered to be advantageous for the reason that a clear clipping effect is achieved on insertion. The provision of an arrow head is considered to be advantageous for the reason that the arrowhead is able to extend an appreciable distance into an additional support when inserted into a corresponding opening.

Embodiments are being considered in which the U-shaped end is replaced with an arrowhead. The support fastener mating portions of the support that receive the U-shaped end can be manufactured to a sufficient tolerance quite readily. For this reason it is considered that replacing the U-shaped portions is undesirable.

It is considered that preferred embodiments of the present invention have a number of advantages, including the ability to manufacture channels and channel fastening elements as separate pieces for ready extrusion and for the fastening elements to be positioned within a support member at spaced apart locations therealong with the fastening elements being positioned by pushing the fastening elements through spaced apart openings of the support member.

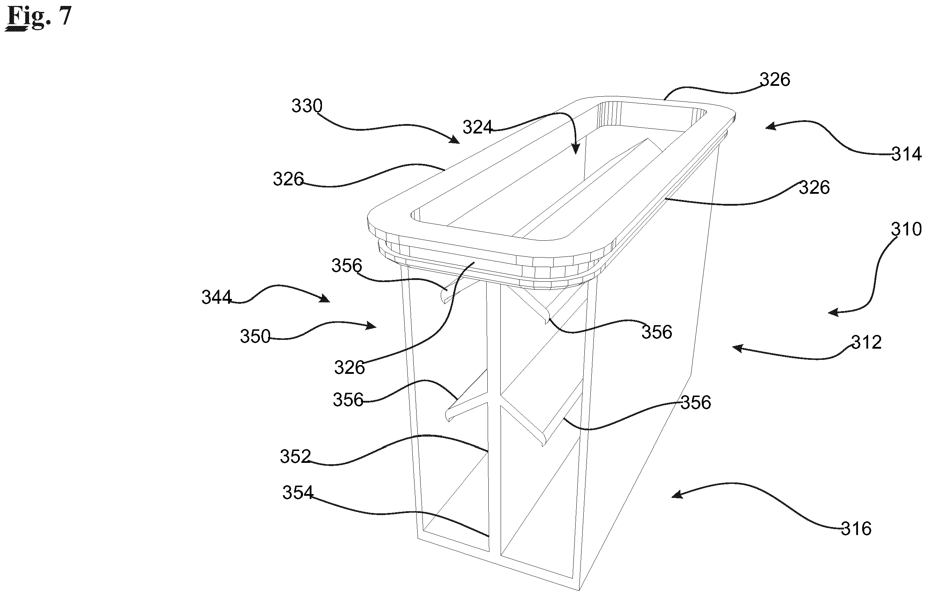

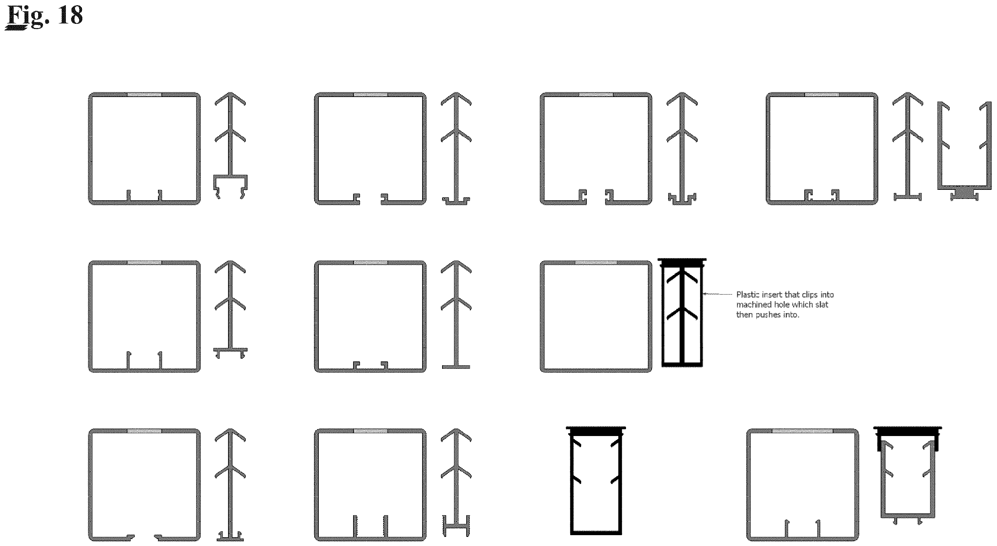

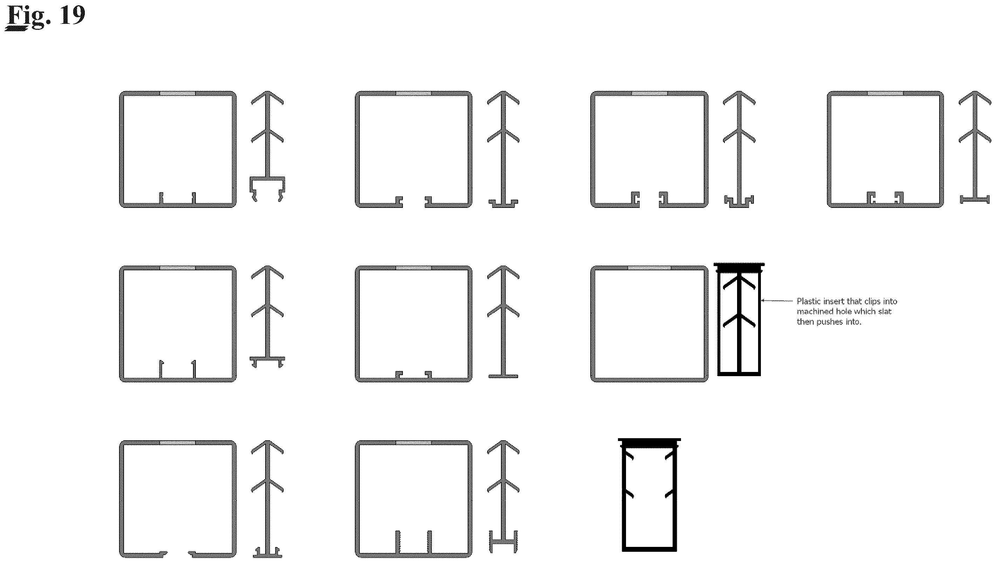

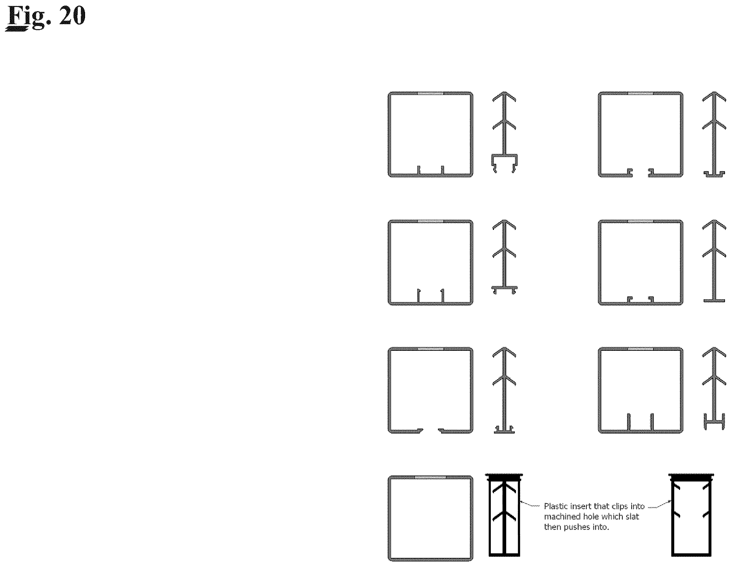

### Drawings: Figures 7 to 20 (Cartridge)

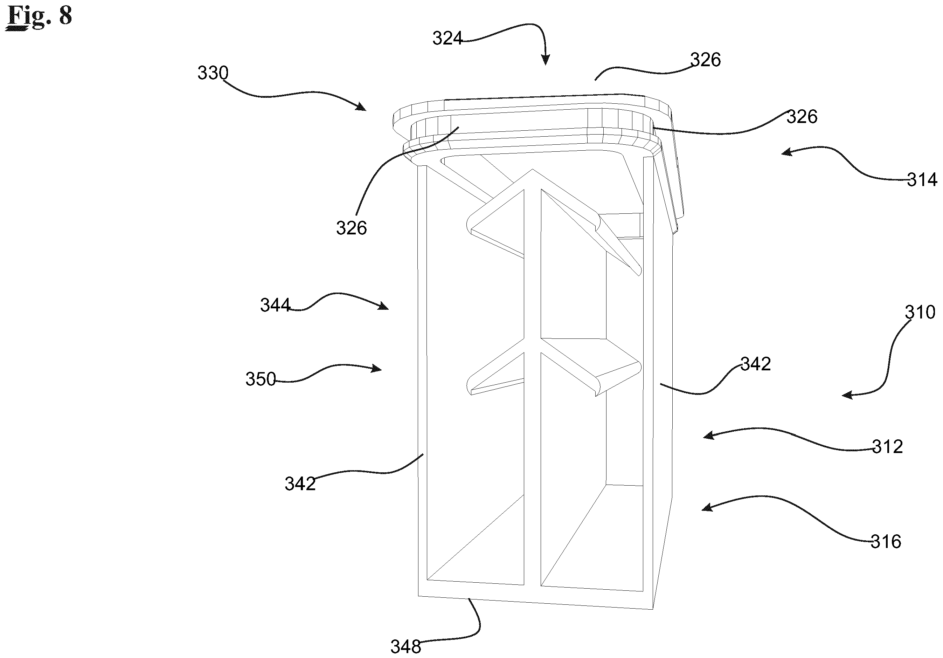

Referring to Figures 7 and 8 there is shown a fastening element 310 according to a first preferred embodiment of the present invention. The fastening element 310 advantageously provides an element that engages side walls that provide the external periphery of a support. This is in distinction to engaging internal side walls that do not provide the external periphery of the support. The fastening element 310 is able to receive an additional support that is mounted by the fastening element 310 to the support.

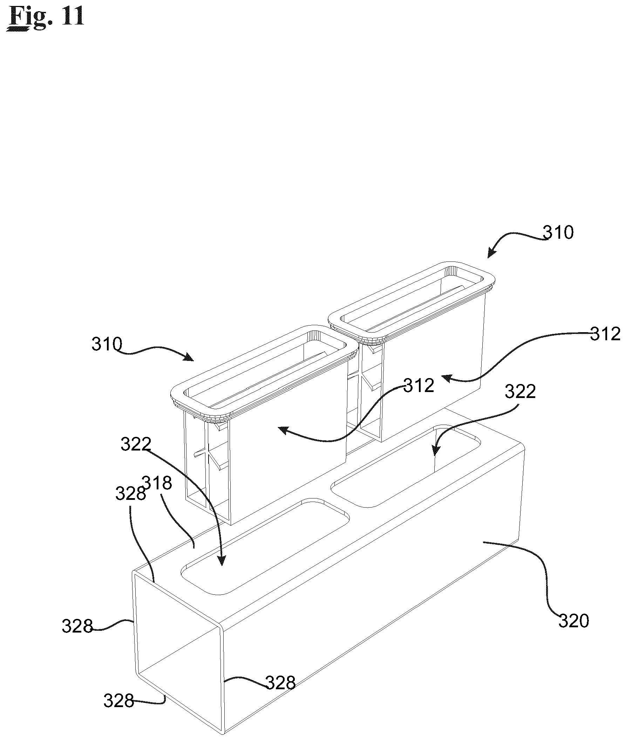

Referring to Figure 7, the fastening element comprises: a body 312 having a fastening end 314 and an opposite end 316. Referring to Figure 11, the fastening end 314 is configured for engaging a side wall 318 of an elongate support 320. The side wall 318 comprises a flat side wall 318 of the support 312 having a number of openings 322 therein.

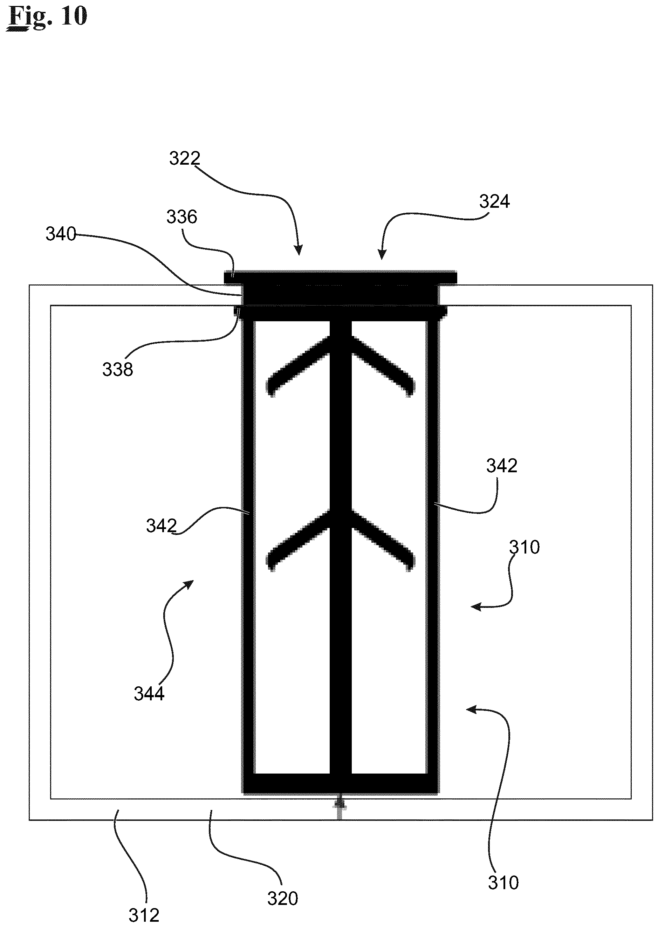

Referring to Figure 10, when in position, the body 312 of the fastening element 310 extends into the support 320 from the fastening end 314 (at the side wall 318 of the support) towards the opposite end 316. The fastening end provides an opening 324 for receiving an additional support.

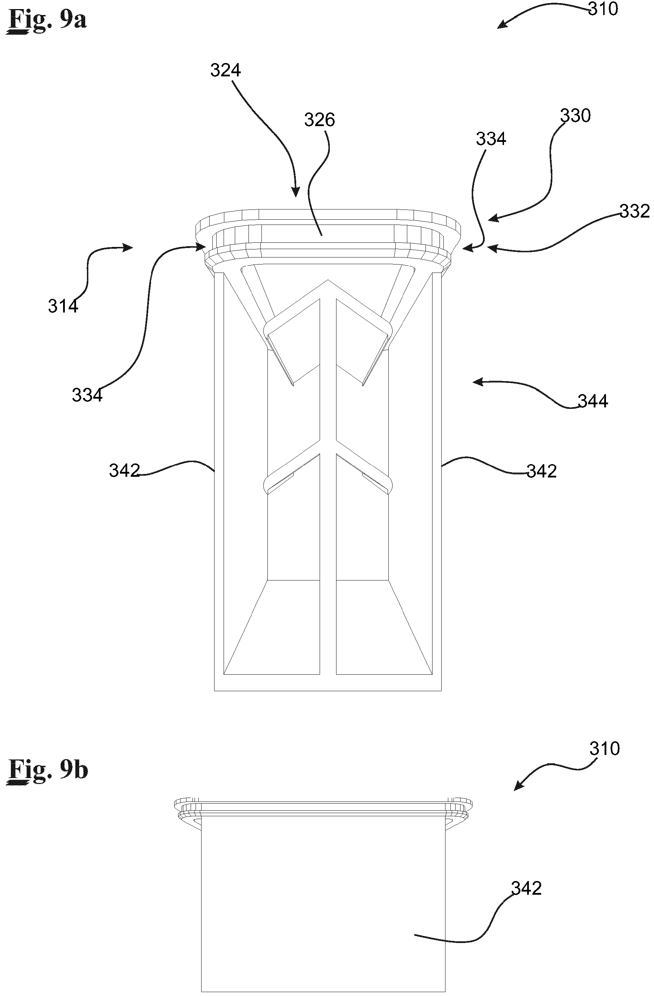

Referring to Figure 9a, the fastening end 314 is configured for clip engagement with the side wall 318 of the support 320. The fastening end 314 includes fastener-support mating portions 326 that extend around the opening 324. Each fastener-support mating portion 326 comprises push fit portions configured to be pushed towards the side wall 318 and engage by fitting therewith to hold the fastening element 310 to the support 320.

Advantageously the side wall 318 comprises a thin walled section of the support that provides an opening 322 into the body of the support 320. The thin walled section comprises the thickness of the side walls 318 provided during extrusion of the support 320. Generally the side wall thickness will be about 2mm. However various embodiments are of course possible.

More particularly, the fastening end 314 includes a rim 330 for engaging the side wall 318 of the support that provides the opening 322. The rim 330 comprises a lateral flange 332 that extends around the opening 324 that is provided for receiving the additional support. The lateral flange 332 comprises a C-shape opening extending laterally around the opening 324. The lateral flange 332 extends laterally away from the body 312 of the fastening element 310 and includes a channel 334 that faces laterally outwardly for receiving the side wall 318. The fastening element 310 may be extruded from materials including aluminium and plastics. The fastening element 310 may be extruded as one continuous length before the continuous length is machined to provide multiple fastening elements 310.

The rim 330 is configured for collared engagement with the side wall 318 of the support. The collared engagement comprises providing an abutment 336 above the channel 334 and external to the body of the support 312. The collared engagement further provides abutment 338 internal to the body of the support, when the fastening end 314 engages the side wall 318. The abutment 338 is provided for flexing clip engagement when pushed through the opening 322.

The channel 334 opens laterally outwardly is provided as a groove for receiving an edge 340 of the side wall 318 of the support 320. Notably engagement occurs by gripping the side wall 318 around the opening 322. The abutment 338 is smaller than the abutment 336. As would be apparent, in other embodiments this may not be the case.

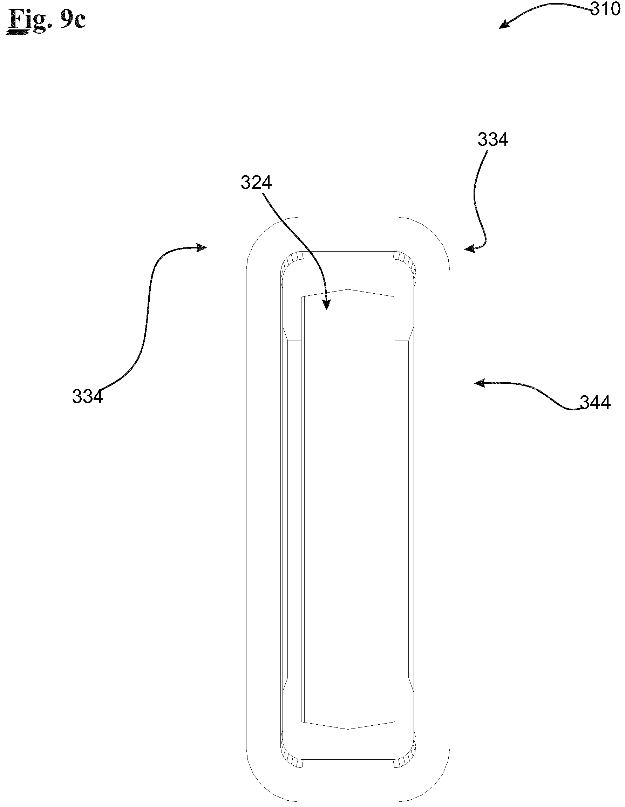

The body 312 includes a number of side walls 342 extending from the fastening end 314 to the opposite end 316. In this embodiment the side walls 342 provide a casing 344 that limits the passage of dirt and other material beyond the fastening element 310, into the further reaches of the support 320, when in a mounted position as shown in Figure 10. Referring to Figure 10 the casing 434 is considered to possibly limit damage to additional supports 346 that are received by the casing 344 through the opening 324. This could be achieved by limiting lateral movement (relative to the fastening element). Figure 9b and Figure 9c provide additional views. Among other things, Figure 9b illustrates the side walls 342 and Figure 9c illustrates the opening 324.

As shown in Figure 8, the side walls 342 comprise continuous side walls that provide the body 312 as a rectangularly shaped casing. The side walls 342 comprise two side walls 342 extending from the fastening end 314 to the opposite end 316. The side walls 342 extend perpendicularly to the opposite end 316 and also across in the longitudinal direction of the body 312.

A rear wall 348 provides a base. Referring to Figure 7, the side walls 342 provide a walled structure 350 assisting with limiting rotation of the additional support 346 when the additional support 346 is received through the opening 324 of the fastening end 314 and is held in position by an internal structure 352. The internal structure 352 is provided in the form of a fastener-support mating portion 354.

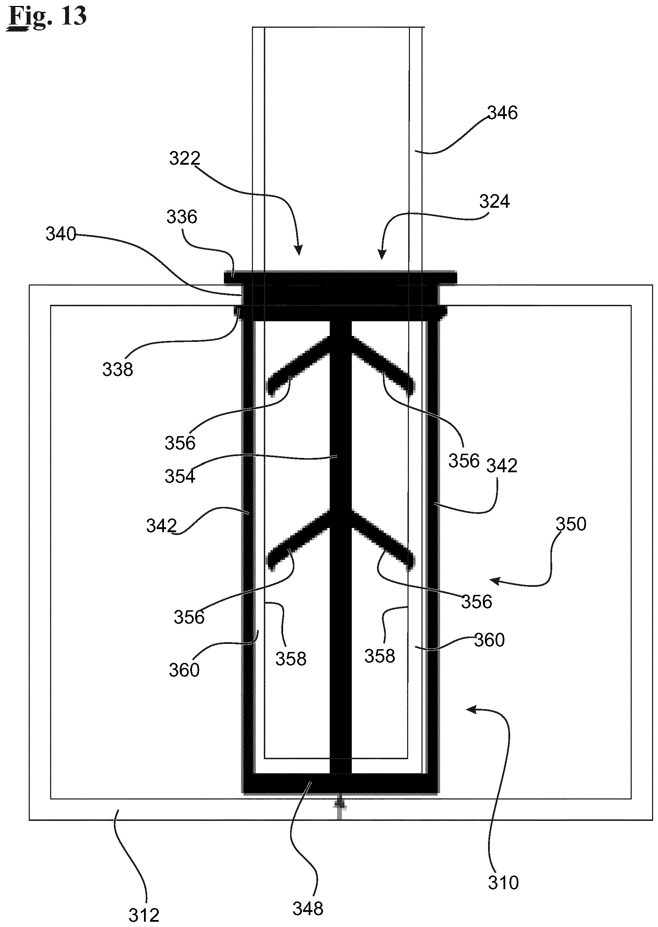

Referring to Figure 13, the walled structure 350 houses the fastener-support mating portion 354 for receiving the additional support 346. The fastener-support mating portion 354 includes a number of downwardly extending portions 356 for bearing against the internal surface 358 of the side walls 360 of the additional support 346.

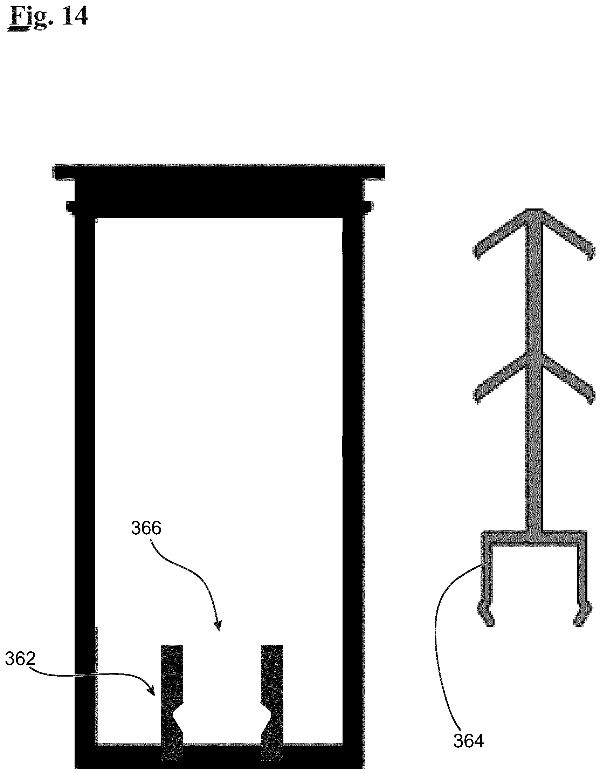

Figure 14 illustrates a further preferred embodiment of the present invention where the rear wall 348 provides a number of casing-fastener mating portions 362 for a fastener element 364. The casing-fastening mating portions 362 comprise a pair of elements 366 spaced apart towards the opposite end.

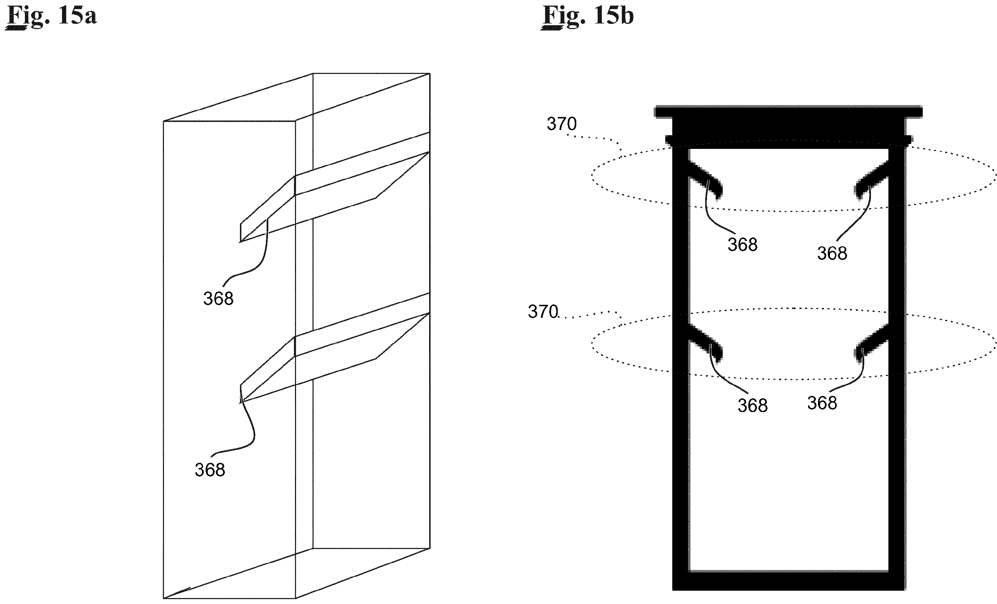

In alternative embodiments shown in Figure 15a and 15b, there are provided a number of fastener-support mating portions 368 comprising a number of elements extending away from the side walls of the body providing the walled structure. The fastener-support mating portions 368 are provided for bearing against the outer surface of an additional support. The fastener-support mating portions 368 are not preferred as they would scratch the outer surface of the additional support. The fastener-support mating portions 368 extend from the side wall of the walled structure in a direction laterally into the body and towards the opposite end of the body away from the fastening end. The fastener-support mating portions 368 provide two pairs 370 of elements spaced apart towards the opposite end. Each pair of elements comprises a first element on a side wall of the body and a second element on an opposite side wall of the body facing towards the first element. The side wall and the opposite side wall of the body extend along the support.

Returning to Figure 7, the fastener-support mating portion 354 is configured to provide an arrow structure having a number of elements 356 extending toward the side walls 342 of the body in a direction laterally outwardly and downwardly towards the opposite end 316 of the body 312. By engaging the lip of the opening 324 in the support 230, retrofitting to existing support systems may be possible in some embodiments.

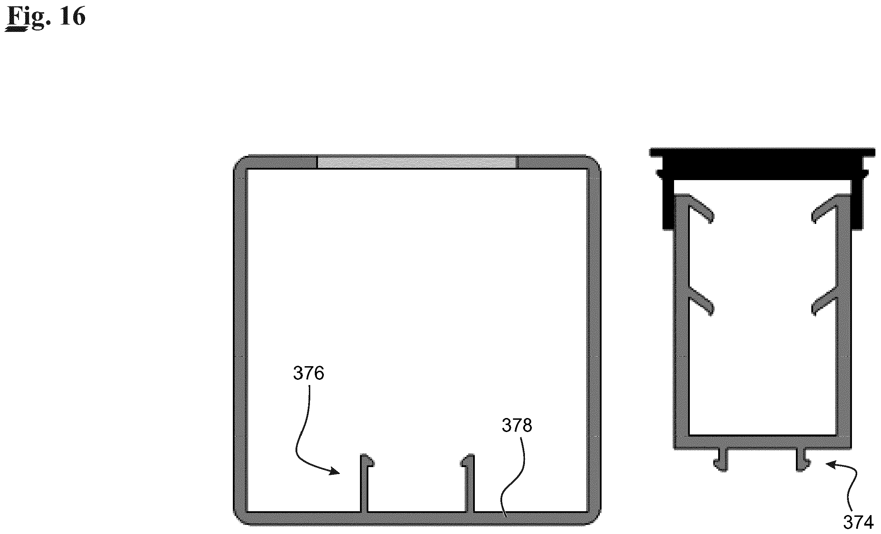

Referring to Figure 16, a further embodiment is shown in which the opposite end includes a fastener-support mating portion 374 extending away from the body 312 from an outer surface. The fastener-support mating portion 374 is provided for engagement with support-fastener mating portion 376 provided on a second side wall 378 of the support, internal to the support. Various fastener-support mating portions are described herein.

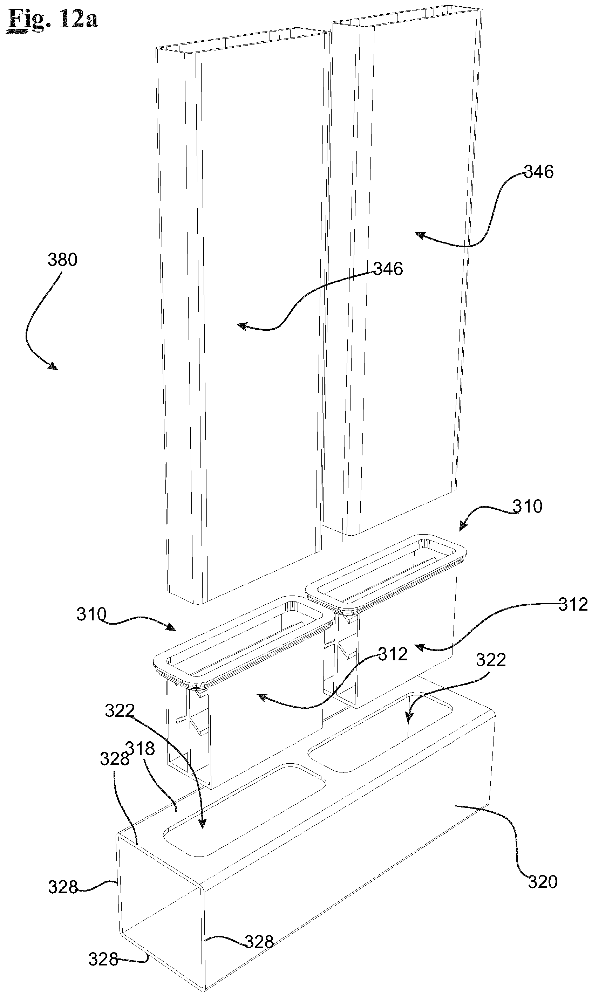

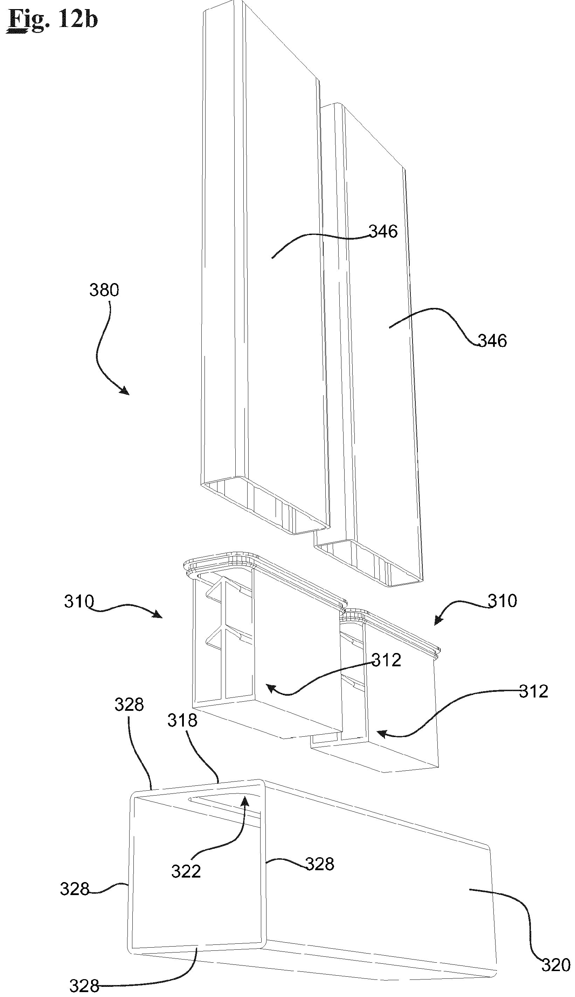

Returning to Figure 12, there is provided a fastening system 380 comprising: a support 320 and a plurality of fastening elements 310. Each fastening element 310 comprising: a body 312 having a fastening end 314 and an opposite end 316. The fastening end 314 is configured for engaging a side wall 318 of the elongate support with the body of the fastening element 310 extending into the support 320 towards the opposite end 316. The fastening end 314 is provided for receiving an additional support 346.

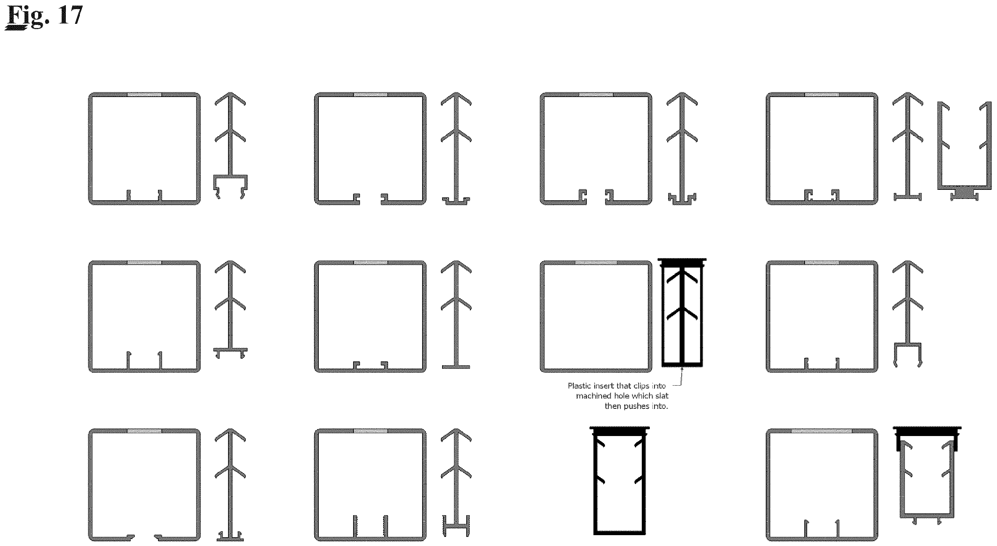

Figures 17 to 20 illustrate further various fastening elements.

As would be apparent, various alterations and equivalent forms may be provided without departing from the scope of the present invention as defined in the appended claims.

There is no intention to limit the present invention to the specific embodiments shown in the drawings.

In the present specification, the presence of particular features does not preclude the existence of further features. The words 'comprising', 'including', 'or' and 'having' are to be construed in an inclusive rather than an exclusive sense.

It is to be recognised that any discussion in the present specification is intended to explain the context of the present invention. It is not to be taken as an admission that the material discussed formed part of the prior art base or relevant general knowledge in any particular country or region.

## Claims

1. A panel mount (10) comprising: a support (12, 68, 130, 142, 162, 210, 320); a plurality of fastening elements (14, 70, 98, 118, 120, 164, 310) spaced along the support (12, 68, 130, 142, 162, 210, 320) ; each fastening element (14, 70, 98, 118, 120, 164, 310) has a fastener-support mating portion (16, 60, 24, 166, 326, 354, 368, 374) for engagement with a corresponding support-fastener mating portion (18, 34, 66, 102, 106, 144, 168, 376) of the support (12, 68, 130, 142, 162, 210, 320) ; the support (12, 68, 130, 142, 162, 210, 320) having the corresponding support-fastener mating portions (18, 34, 66, 102, 106, 144, 168, 376) disposed there along, wherein each fastening element (14, 70, 98, 118, 120, 164, 310) is configured for engaging at least one inner surface of a panel member (78, 200) to apply an engaging force that is directed laterally outwardly, relative to the panel member (78, 200), when the panel member (78, 200) is engaged by the fastening element (14, 70, 98, 118, 120, 164, 310), whereby each fastening element (14, 70, 98, 118, 120, 164, 310) comprises a first end (194) with an extension (26, 132, 136, 186, 198), the extension (26, 132, 136, 186, 198) including at least two sets of downwardly directed extensions (28, 188, 208, 356) extending at different heights downwardly from the body of the extension (26, 132, 136, 186, 198) towards lateral sides of a panel member (78, 200) for bearing against inner surfaces (204) of the panel member (78, 200) to apply an engaging force in a direction laterally outwardly relative to the panel member (78, 200), whereby said fastening element (14, 70, 98, 118, 120, 164, 310) has the fastener-support mating portion (16, 60, 24, 166, 326, 354, 368, 374) at a second end (196) for engagement with the corresponding support-fastener mating portion (18, 34, 66, 102, 106, 144, 168, 376) of the support (12, 68, 130, 142, 162, 210, 320), wherein the support (12, 68, 130, 142, 162, 210, 320) has openings (36, 100, 116, 134, 158, 170, 322) spaced along the support (12, 68, 130, 142, 162, 210, 320); **characterized in that** the openings (36, 100, 116, 134, 158, 170, 322) are spaced along an elongate side of the support (12, 68, 130, 142, 162, 210, 320) that is opposite the support-fastener mating portions (18, 34, 66, 102, 106, 144, 168, 376); each fastening element (14, 70, 98, 118, 120, 164, 310) having to be pushed through a corresponding one of the openings (36, 100, 116, 134, 158, 170, 322) towards the corresponding support-fastener mating portion (18, 34, 66, 102, 106, 144, 168, 376) and engage therewith to hold the fastening element (14, 70, 98, 118, 120, 164, 310) to the support (12, 68, 130, 142, 162, 210, 320) and each fastening element (14, 70, 98, 118, 120, 164, 310) receives a panel member (78, 200) extending through the associated opening (36, 100, 116, 134, 158, 170, 322) of the support (12, 68, 130, 142, 162, 210, 320).

2. A panel mount (10) as claimed in claim 1 wherein the panel mount (10) is re-usable with each fastening element (14, 70, 98, 118, 120, 164, 310) being removable from a panel member (78, 200) to allow the fastening element (14, 70, 98, 118, 120, 164, 310) to be used with another panel member (78, 200) and wherein each fastening element (14, 70, 98, 118, 120, 164, 310) comprises an extension (26, 132, 136, 186, 198) that extends upwardly from the support (12, 68, 130, 142, 162, 210, 320) of the panel mount (10), the extension (26, 132, 136, 186, 198) including side portions (28, 188, 208, 356) extending from the body of the extension (26, 132, 136, 186, 198) towards the lateral sides of the support (12, 68, 130, 142, 162, 210, 320); the side portions (28, 188, 208, 356) for bearing against the inner surfaces of the panel member (78, 200) to apply the engaging force in a direction laterally outwardly relative to the panel member (78, 200).

3. A panel mount (10,) as claimed in claim 1 wherein the fastener-support mating portions (16, 60, 24, 166, 326, 354, 368, 374) each comprise a push fit portion (24, 166) configured to be pushed towards the corresponding support-fastener mating portion (18, 34, 66, 102, 106, 144, 168, 376) and engage therewith to hold the fastening element (14, 70, 98, 118, 120, 164, 310) to the support (12, 68, 130, 142, 162, 210, 320).

4. A panel mount (10) as claimed in any preceding claim, wherein the fastener-support mating portions (16, 60, 24, 166, 326, 354, 368, 374) each comprise a push fit portion (24, 166) configured to be pushed towards the corresponding support-fastener mating portion (18, 34, 66, 102, 106, 144, 168, 376) and engage therewith to hold the fastening element (14, 70, 98, 118, 120, 164, 310) to the support (12, 68, 130, 142, 162, 210, 320); each fastener-support mating portion (16, 60, 24, 166, 326, 354, 368, 374) and corresponding support-fastener mating portion (18, 34, 66, 102, 106, 144, 168, 376) providing a male clip portion (32, 64, 94, 178) and a female clip portion (38, 66, 90 180) for clipping engagement.

5. A panel mount (10) as claimed in claim 4 wherein each male clip portion (32, 64, 94, 178) includes two longitudinally extending portions (40, 64, 94, 190) and the corresponding female portion (38, 66, 90, 180) includes two longitudinally extending portions (38 66, 96, 192) for receiving the longitudinally extending portions (40, 64, 94, 190) of the male clip portion (32, 64, 94, 178) there between.

## Patentansprüche

1. Eine Paneelhalterung (10), umfassend einen Träger (12, 68, 130, 142, 162, 210, 320); eine Vielzahl von entlang des Trägers (12, 68, 130, 142, 162, 210, 320) beabstandeten Befestigungselementen (14, 70, 98, 118, 120, 164, 310); wobei jedes Befestigungselement (14, 70, 98, 118, 120, 164, 310) einen Befestigungselement-Träger-Paarungsabschnitt (16, 60, 24, 166, 326, 354, 368, 374) zum Eingriff mit einem entsprechenden Träger-Befestigungselement-Paarungsabschnitt (18, 34, 66, 102, 106, 144, 168, 376) des Trägers (12, 68, 130, 142, 162, 210, 320) aufweist; wobei der Träger (12, 68, 130, 142, 162, 210, 320) die entsprechenden Träger-Befestigungselement-Paarungsabschnitte (18, 34, 66, 102, 106, 144, 168, 376) an ihm entlang angeordnet aufweist, wobei jedes Befestigungselement(14, 70, 98, 118, 120, 164, 310) zum derartigen Einwirken auf mindestens eine Innenfläche eines Paneelelements (78, 200) ausgelegt ist, dass es eine Einwirkungskraft aufbringt, die relativ zu dem Paneelelement (78, 200) seitlich nach außen gerichtet ist, wenn auf das Paneelelement (78, 200) durch das Befestigungselement (14, 70, 98, 118, 120, 164, 310) eingewirkt wird, wobei jedes Befestigungselement (14, 70, 98, 118, 120, 164, 310) ein erstes Ende (194) mit einer Verlängerung (26, 132, 136, 186, 198) umfasst, wobei die Verlängerung (26, 132, 136, 186, 198) mindestens zwei Gruppen von nach unten gerichteten Verlängerungen (28, 188, 208, 356) umfasst, die sich in unterschiedlichen Höhen vom Körper der Verlängerung (26, 132, 136, 186, 198) nach unten zu Längsseiten eines Paneelelements (78, 200) derart hin erstrecken, dass sie an Innenflächen (204) des Paneelelements (78, 200) derart anliegen, dass sie eine Einwirkungskraft in einer Richtung seitlich nach außen relativ zu dem Paneelelement (78, 200) aufbringen, wobei das Befestigungselement (14, 70, 98, 118, 120, 164, 310) an einem zweiten Ende (196) den Befestigungselement-Träger-Paarungsabschnitt (16, 60, 24, 166, 326, 354, 368, 374) zum Eingriff mit dem entsprechenden Träger-Befestigungselement-Paarungsabschnitt (18, 34, 66, 102, 106, 144, 168, 376) des Trägers (12, 68, 130, 142, 162, 210, 320) aufweist, wobei der Träger (12, 68, 130, 142, 162, 210, 320) entlang des Trägers (12, 68, 130, 142, 162, 210, 320) beabstandete Öffnungen (36, 100, 116, 134, 158, 170, 322) aufweist; **dadurch gekennzeichnet, dass** die Öffnungen (36, 100, 116, 134, 158, 170, 322) entlang einer den Träger-Befestigungselement-Paarungsabschnitten (18, 34, 66, 102, 106, 144, 168, 376) gegenüberliegenden langgestreckten Seite des Trägers (12, 68, 130, 142, 162, 210, 320) voneinander beabstandet sind; wobei jedes Befestigungselement (14, 70, 98, 118, 120, 164, 310) durch eine entsprechende der Öffnungen (36, 100, 116, 134, 158, 170, 322) in Richtung des entsprechenden Träger-Befestigungselement-Paarungsabschnitts (18, 34, 66, 102, 106, 144, 168, 376) gedrückt werden und damit in Eingriff kommen muss, um das Befestigungselement (14, 70, 98, 118, 120, 164, 310) gegen den Träger (12, 68, 130, 142, 162, 210, 320) zu halten, und jedes Befestigungselement (14, 70, 98, 118, 120, 164, 310) ein Paneelelement (78, 200) aufnimmt, das sich durch die zugeordnete Öffnung (36, 100, 116, 134, 158, 170, 322) des Trägers (12, 68, 130, 142, 162, 210, 320) erstreckt.

2. Paneelhalterung (10) nach Anspruch 1, wobei die Paneelhalterung (10) wiederverwendbar ist, wobei jedes Befestigungselement (14, 70, 98, 118, 120, 164, 310) von einem Paneelelement (78, 200) abnehmbar ist, damit das Befestigungselement (14, 70, 98, 118, 120, 164, 310) bei einem anderen Paneelelement (78, 200) verwendet werden kann, und wobei jedes Befestigungselement (14, 70, 98, 118, 120, 164, 310) eine sich von dem Träger (12, 68, 130, 142, 162, 210, 320) der Paneelhalterung (10) nach oben erstreckende Verlängerung (26, 132, 136, 186, 198) umfasst, wobei die Verlängerung (26, 132, 136, 186, 198) sich von dem Körper der Verlängerung (26, 132, 136, 186, 198) zu den Längsseiten des Trägers (12, 68, 130, 142, 162, 210, 320) erstreckende Seitenabschnitte (28, 188, 208, 356) umfasst; wobei die Seitenabschnitte (28, 188, 208, 356) zum Anliegen an den Innenflächen des Paneelelements (78, 200) vorgesehen sind, um die Einwirkungskraft in einer Richtung seitlich nach außen relativ zum Paneelelement (78, 200) aufzubringen.

3. Paneelhalterung (10) nach Anspruch 1, wobei die Befestigungselement-Träger-Paarungsabschnitte (16, 60, 24, 166, 326, 354, 368, 374) jeweils einen Steckpassungsabschnitt (24, 166) umfassen, der dazu ausgelegt ist, in Richtung des entsprechenden Träger-Befestigungselement-Paarungsabschnitts (18, 34, 66, 102, 106, 144, 168, 376) gedrückt zu werden und mit diesem derart in Eingriff zu kommen, dass das Befestigungselement (14, 70, 98, 118, 120, 164, 310) gegen den Träger (12, 68, 130, 142, 162, 210, 320) gehalten wird.

4. Paneelhalterung (10) nach einem der vorhergehenden Ansprüche, wobei die Befestigungselement-Träger-Paarungsabschnitte (16, 60, 24, 166, 326, 354, 368, 374) jeweils einen Steckpassungsabschnitt (24, 166) umfassen, der dazu ausgelegt ist, in Richtung des entsprechenden Träger-Befestigungselement-Paarungsabschnitts (18, 34, 66, 102, 106, 144, 168, 376) gedrückt zu werden und mit diesem derart in Eingriff zu kommen, dass das Befestigungselement (14, 70, 98, 118, 120, 164, 310) gegen den Träger (12, 68, 130, 142, 162, 210, 320) gehalten wird; wobei jeder Befestigungselement-Träger-Paarungsabschnitt (16, 60, 24, 166, 326, 354, 368, 374) und entsprechende Träger-Befestigungselement-Paarungsabschnitt (18, 34, 66, 102, 106, 144, 168, 376) einen Klammersteckabschnitt (32, 64, 94, 178) und einen Klammeraufnahmeabschnitt (38, 66, 90, 180) für den klammernden Eingriff bereitstellen.

5. Paneelhalterung (10) nach Anspruch 4, wobei jeder Klammersteckabschnitt (32, 64, 94, 178) zwei sich in Längsrichtung erstreckende Abschnitte (40, 64, 94, 190) aufweist und der entsprechende Aufnahmeabschnitt (38, 66, 90, 180) zwei sich in Längsrichtung erstreckende Abschnitte (38, 66, 96, 192) zur Aufnahme der sich in Längsrichtung erstreckenden Abschnitte (40, 64, 94, 190) des Klammersteckabschnitts (32, 64, 94, 178) zwischen ihnen aufweist.

## Revendications

1. Montant de panneau (10) comprenant : un support (12, 68, 130, 142, 162, 210, 320) ; une pluralité d'éléments de fixation (14, 70, 98, 118, 120, 164, 310) espacés le long du support (12, 68, 130, 142, 162, 210, 320) ; chaque élément de fixation (14, 70, 98, 118, 120, 164, 310) comporte une partie d'accouplement élément de fixation-support (16, 60, 24, 166, 326, 354, 368, 374) destinée à s'emboîter avec une partie d'accouplement support-élément de fixation correspondante (18, 34, 66, 102, 106, 144, 168, 376) du support (12, 68, 130, 142, 162, 210, 320) ; le support (12, 68, 130, 142, 162, 210, 320) comportant les parties d'accouplement support-élément de fixation correspondantes (18, 34, 66, 102, 106, 144, 168, 376) disposées le long de celui-ci, dans lequel chaque élément de fixation (14, 70, 98, 118, 120, 164, 310) est conçu pour s'emboîter sur au moins une surface interne d'un élément de panneau (78, 200) de façon à appliquer une force d'emboîtement qui est dirigée latéralement vers l'extérieur, par rapport à l'élément de panneau (78, 200), lorsque l'élément de panneau (78, 200) est emboîté par l'élément de fixation (14, 70, 98, 118, 120, 164, 310), de sorte que chaque élément de fixation (14, 70, 98, 118, 120, 164, 310) comprend une première extrémité (194) ayant une extension (26, 132, 136, 186, 198), l'extension (26, 132, 136, 186, 198) comprenant au moins deux ensembles d'extensions dirigées vers le bas (28, 188, 208, 356) s'étendant à différentes hauteurs vers le bas depuis le corps de l'extension (26, 132, 136, 186, 198) vers des parois latérales d'un élément de panneau (78, 200) pour s'appuyer contre des surfaces internes (204) de l'élément de panneau (78, 200) de façon à appliquer une force d'emboîtement dans une direction latéralement vers l'extérieur par rapport à l'élément de panneau (78, 200), de sorte que ledit élément de fixation (14, 70, 98, 118, 120, 164, 310) comporte la partie d'accouplement élément de fixation-support (16, 60, 24, 166, 326, 354, 368, 374) au niveau d'une seconde extrémité (196) pour assurer un emboîtement avec la partie d'accouplement support-élément de fixation correspondante (18, 34, 66, 102, 106, 144, 168, 376) du support (12, 68, 130, 142, 162, 210, 320), dans lequel le support (12, 68, 130, 142, 162, 210, 320) comporte des ouvertures (36, 100, 116, 134, 158, 170, 322) espacées le long du support (12, 68, 130, 142, 162, 210, 320) ; **caractérisé en ce que** les ouvertures (36, 100, 116, 134, 158, 170, 322) sont espacées le long d'un côté allongé du support (12, 68, 130, 142, 162, 210, 320) qui est opposé aux parties d'accouplement support-élément de fixation (18, 34, 66, 102, 106, 144, 168, 376) ; chaque élément de fixation (14, 70, 98, 118, 120, 164, 310) devant être poussé à travers une ouverture correspondante parmi les ouvertures (36, 100, 116, 134, 158, 170, 322) vers la partie d'accouplement support-élément de fixation correspondante (18, 34, 66, 102, 106, 144, 168, 376) et s'emboîter avec celle-ci de façon à maintenir l'élément de fixation (14, 70, 98, 118, 120, 164, 310) dans le support (12, 68, 130, 142, 162, 210, 320) et chaque élément de fixation (14, 70, 98, 118, 120, 164, 310) reçoit un élément de panneau (78, 200) s'étendant à travers l'ouverture associée (36, 100, 116, 134, 158, 170, 322) du support (12, 68, 130, 142, 162, 210, 320).

2. Montant de panneau (10) selon la revendication 1, dans lequel le montant de panneau (10) est réutilisable avec chaque élément de fixation (14, 70, 98, 118, 120, 164, 310) pouvant être retiré d'un élément de panneau (78, 200) de façon à permettre l'utilisation de l'élément de fixation (14, 70, 98, 118, 120, 164, 310) avec un autre élément de panneau (78, 200) et dans lequel chaque élément de fixation (14, 70, 98, 118, 120, 164, 310) comprend une extension (26, 132, 136, 186, 198) qui s'étend vers le haut depuis le support (12, 68, 130, 142, 162, 210, 320) du montant de panneau (10), l'extension (26, 132, 136, 186, 198) comprenant des parties latérales (28, 188, 208, 356) s'étendant depuis le corps de l'extension (26, 132, 136, 186, 198) vers les parois latérales du support (12, 68, 130, 142, 162, 210, 320) ; les parties latérales (28, 188, 208, 356) étant destinées à s'appuyer contre les surfaces internes de l'élément de panneau (78, 200) de façon à appliquer la force d'emboîtement dans une direction latéralement vers l'extérieur par rapport à l'élément de panneau (78, 200).

3. Montant de panneau (10) selon la revendication 1, dans lequel les parties d'accouplement élément de fixation-support (16, 60, 24, 166, 326, 354, 368, 374) comprennent chacune une partie d'ajustement par poussée (24, 166) conçue pour être poussée vers la partie d'accouplement support-élément de fixation correspondante (18, 34, 66, 102, 106, 144, 168, 376) et s'emboîter avec celle-ci de façon à maintenir l'élément de fixation (14, 70, 98, 118, 120, 164, 310) dans le support (12, 68, 130, 142, 162, 210, 320).

4. Montant de panneau (10) selon une quelconque revendication précédente, dans lequel les parties d'accouplement élément de fixation-support (16, 60, 24, 166, 326, 354, 368, 374) comprennent chacune une partie d'ajustement par poussée (24, 166) conçue pour être poussée vers la partie d'accouplement support-élément de fixation correspondante (18, 34, 66, 102, 106, 144, 168, 376) et s'emboîter avec celle-ci de façon à maintenir l'élément de fixation (14, 70, 98, 118, 120, 164, 310) dans le support (12, 68, 130, 142, 162, 210, 320) ; chaque partie d'accouplement élément de fixation-support (16, 60, 24, 166, 326, 354, 368, 374) et chaque partie d'accouplement support-élément de fixation correspondante (18, 34, 66, 102, 106, 144, 168, 376) définissant une partie de pince mâle (32, 64, 94, 178) et une partie de pince femelle (38, 66, 90, 180) destinées à assurer emboîtement par pincement.

5. Montant de panneau (10) selon la revendication 4, dans lequel chaque partie de pince mâle (32, 64, 94, 178) comporte deux parties s'étendant longitudinalement (40, 64, 94, 190) et la partie femelle correspondante (38, 66, 90, 180) comporte deux parties s'étendant longitudinalement (38, 66, 96, 192) destinées à recevoir les parties s'étendant longitudinalement (40, 64, 94, 190) de la partie de pince mâle (32, 64, 94, 178) entre celles-ci.
